(19) Europäisches Patentamt
European Patent Office
Office européen des brevets

(11) **EP 4 686 286 A1**

(12) **EUROPEAN PATENT APPLICATION**
published in accordance with Art. 153(4) EPC

(43) Date of publication:
**28.01.2026 Bulletin 2026/05**

(21) Application number: **23927957.3**

(22) Date of filing: **20.03.2023**

(51) International Patent Classification (IPC):
***H04W 72/0446*** *(2023.01)*

(52) Cooperative Patent Classification (CPC):
**H04W 72/0446**

(86) International application number:
**PCT/CN2023/082595**

(87) International publication number:
**WO 2024/192640 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Zhenshan
Dongguan, Guangdong 523860 (CN)**

(74) Representative: **Mewburn Ellis LLP
Aurora Building
Counterslip
Bristol BS1 6BX (GB)**

(54) **SIDELINK COMMUNICATION METHOD, AND TERMINAL DEVICE**

(57)      Provided are a sidelink communication method, and a terminal device. The method comprises: a first terminal device determining a first channel state information reference signal (CSI-RS) resource in a first time unit, wherein the first time unit meets either of the following conditions: the first time unit comprising a plurality of consecutive slots; or the first time unit comprising one slot, and the first CSI-RS resource being a transmission resource reserved by the terminal device for sending a CSI-RS. The method is conducive to improving the transmission efficiency of CSI-RSs.

The first terminal device can determine a first CSI-RS resource in a first time unit ⎯ S1610

FIG.16

## Description

## TECHNICAL FIELD

The present disclosure relates to the field of communication technology, and in particular, to a sidelink communication method and a terminal device.

## BACKGROUND

In a known communication system, one slot can contain only one channel state information reference signal (CSI-RS) resource. In a case where a terminal transmitting CSI-RS needs to transmit multiple CSI-RSs, multiple CSI-RSs can only be transmitted respectively through a plurality of slots, resulting in low transmission efficiency of the CSI-RSs.

## SUMMARY

The present disclosure provides a sidelink communication method and a terminal device. Various aspects involved in the present disclosure will be described below.

In a first aspect, a sidelink communication method is provided. The method includes determining, by a first terminal device, a first channel state information reference signal (CSI-RS) resource in a first time unit. The first time unit satisfies one of: the first time unit including multiple consecutive slots; and the first time unit including one slot, the first CSI-RS resource being a transmission resource reserved by a terminal device for transmitting CSI-RS.

According to a second aspect, a terminal device is provided. The terminal device is a first terminal device and includes a processing unit. The processing unit is configured to determine a first channel state information reference signal (CSI-RS) resource in a first time unit. The first time unit satisfies one of: the first time unit including multiple consecutive slots; and the first time unit including one slot, the first CSI-RS resource being a transmission resource reserved by a terminal device for transmitting CSI-RS.

In a third aspect, a terminal device is provided. The terminal device includes a processor, a memory and a communication interface. The memory is configured to call a computer program from the memory to cause the terminal device to perform some or all of the steps in the method according to the first aspect.

In a fourth aspect, embodiments of the present disclosure provide a communication system. The communication system includes the terminal device and/or a network device. In another possible design, the system may further include other devices that interact with the terminal device or the network device in the solution provided in the embodiments of the present disclosure.

In a fifth aspect, embodiments of the present disclosure provide a computer-readable storage medium. The computer-readable storage medium stores a computer program, and the computer program causes a communication device (e.g., the terminal device or the network device) to perform some or all of the steps in the methods of the various aspects.

In a sixth aspect, embodiments of the present disclosure provide a computer program product. The computer program product includes a non-transitory computer-readable storage medium storing a computer program, and the computer program is operable to cause a communication device (e.g., the terminal device or the network device) to perform some or all of the steps in the method of the various aspects. In some implementations, the computer program product may be a software installation package.

In a seventh aspect, embodiments of the present disclosure provide a chip. The chip includes a memory and a processor. The processor can call and run a computer program from the memory to perform some or all of the steps in the method of the various aspects.

In the embodiments of the present disclosure, multiple consecutive slots contained may be referred to as a first time unit. Accordingly, the first terminal device may determine the first CSI-RS resource in the first time unit. Compared with a solution in which the terminal device determines the CSI-RS resource in a single slot, a larger number of resources available for transmitting CSI-RSs may be contained in the first time unit, thereby helping to improve transmission efficiency of CSI-RSs.

## BRIEF DESCRIPTION OF THE DRAWINGS

FIG. 1 is an example diagram illustrating a system architecture of a wireless communication system applicable to embodiments of the present disclosure.

FIG. 2 is an example diagram illustrating a scenario of sidelink communication within network coverage.

FIG. 3 is an example diagram illustrating a scenario of sidelink communication with partial network coverage.

FIG. 4 is an example diagram illustrating a scenario of sidelink communication outside network coverage.

FIG. 5 is an example diagram illustrating a scenario of sidelink communication based on a central control node.

FIG. 6 is an example diagram of a broadcast-based sidelink communication manner.

FIG. 7 is an example diagram of a unicast-based sidelink communication manner.

FIG. 8 is an example diagram of a multicast-based sidelink communication manner.

FIG. 9A is an example diagram illustrating a slot structure utilized by a sidelink communication system.

FIG. 9B is an example diagram illustrating another slot structure utilized by the sidelink communication system.

FIG. 10 is a schematic diagram illustrating time-frequency resources occupied by a sidelink (SL) CSI-RS.

FIG. 11 is a schematic diagram illustrating a scenario of beam-based communication.

FIG. 12 is a schematic diagram illustrating another scenario of beam-based communication.

FIG. 13 is a schematic diagram of an indication manner of transmission configuration indicator (TCI) states available for a downlink data channel.

FIG. 14A to FIG. 14C are schematic diagrams each illustrating a resource selection window and a resource sensing window.

FIG. 15 is a schematic diagram of CSI-RS resources included in one slot in embodiments of the present disclosure.

FIG. 16 is a schematic flowchart of a sidelink communication method in embodiments of the present disclosure.

FIG. 17A to FIG. 17E are schematic diagrams each illustrating a first time unit in embodiments of the present disclosure.

FIG. 18 is a schematic diagram of a terminal device in embodiments of the present disclosure.

FIG. 19 is a schematic diagram illustrating a structure of a communication device in embodiments of the present disclosure.

## DETAILED EMBODIMENTS

### Architecture of a communication system

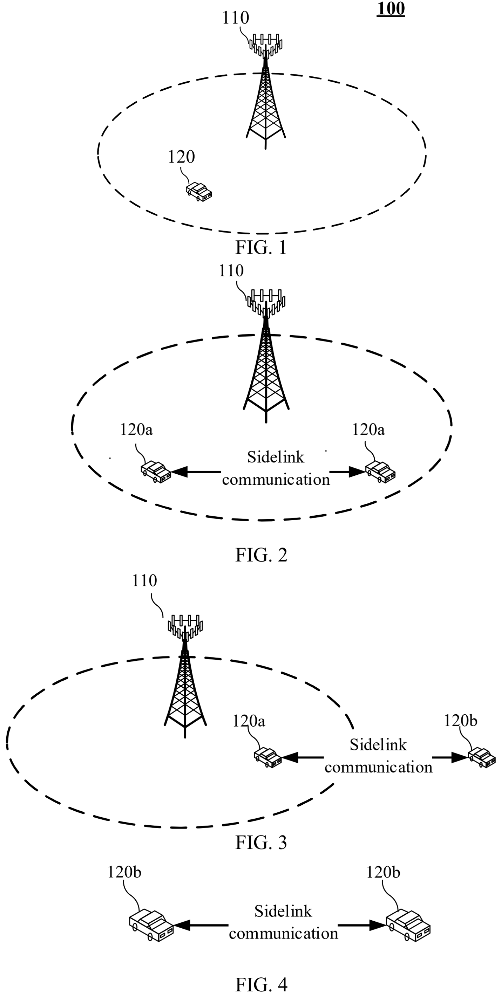

FIG. 1 is an example diagram illustrating a system architecture of a wireless communication system 100 utilized in embodiments of the present disclosure. The wireless communication system 100 may include a network device 110 and terminal devices 120. The network device 110 may be a device that communicates with the terminal device 120. The network device 110 may provide communication coverage for a certain geographical area, and may communicate with the terminal device 120 located within the coverage area.

FIG. 1 exemplarily illustrates one network device and one terminal device. Optionally, the wireless communication system 100 may include one or more network devices 110 and/or one or more terminal devices 120. For one network device 110, the one or more terminal devices 120 may all be located within network coverage of the network device 110, or all be located outside the network coverage of the network device 110, or some may be located within the network coverage of the network device 110 while the others located outside the network coverage of the network device 110, which is not limited in the embodiments of the present disclosure.

Optionally, the wireless communication system 100 may further include other network entities such as a network controller and a mobile management entity, which is not limited in the embodiments of the present disclosure.

It shall be understood that technical solutions of the embodiments of the present disclosure may be applied to various communication systems, such as, a 5th generation (5G) system or a new radio (NR) system, a long term evolution (LTE) system, an LTE frequency division duplex (FDD) system, and an LTE time division duplex (TDD) system. The technical solutions provided in the present disclosure may further be applied to future communication systems, such as a 6th generation mobile communication system, and a satellite communication system.

The terminal device in the embodiments of the present disclosure may also be referred to as a user equipment (UE), an access terminal, a user unit, a user station, a mobile platform, a mobile station (MS), a mobile terminal (MT), a remote station, a remote terminal device, a mobile device, a user terminal, a wireless communication device, a user agent, or a user apparatus. The terminal device in the embodiments of the present disclosure may refer to a device that provides voice connectivity and/or data connectivity to a user and that may be used to connect a person, an object and a machine, for example, a handheld device or a vehicle-mounted device with a wireless connection function. The terminal device in the embodiments of the present disclosure may be a mobile phone, a tablet personal computer (pad), a laptop computer, a handheld computer, a mobile internet device (MID), a wearable device, a vehicle, a wireless terminal in industrial control, a wireless terminal in self-driving, a wireless terminal in a remote medical surgery, a wireless terminal in a smart grid, a wireless terminal in transportation safety, a wireless terminal in a smart city, or a wireless terminal in a smart home, etc. For example, the terminal device may act as a scheduling entity that provides a sidelink signal between terminal devices in vehicle-to-everything (V2X) communication or device-to-device (D2D) communication, etc. For example, a cellular phone and a car communicate with each other by means of a sidelink signal. Communication between the cellular phone and a smart home device does not require a base station to relay a communication signal. Optionally, the terminal device may be configured to act as the base station.

The network device in the embodiments of the present disclosure may be a device for communicating with the terminal device, and the network device may also be referred to as an access network device or a radio access network device. For example, the network device may be a base station. The network device in the embodiments of the present disclosure may refer to a radio access network (RAN) node (or device) that connects the terminal device to a wireless network. The base station may broadly cover following various names, or be replaced with the following names such as, a node B (NodeB), an evolved NodeB (eNB), a next generation NodeB (gNB), a relay station, an access point, a transmitting and receiving point (TRP), a transmitting point (TP), a master eNodeB (MeNB), a secondary eNodeB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node or the like, or a combination thereof. The base station may also refer to a communication module, a modem or a chip that is configured to be arranged in the aforementioned device or apparatus. The base station may also be a mobile switching center; a device that performs a function of the base station in a device-to-device (D2D) communication, a V2X communication, and a machine-to-machine (M2M) communication; a network-side device in the 6G network; or a device that performs the function of the base station in the future communication systems. The base stations may support networks of a same access technology or different access technologies. The specific technology and specific device form used by the network device are not limited in the embodiments of the present disclosure.

The base station may be fixed or mobile. For example, a helicopter or drone may be configured to act as a mobile base station, and one or more cells may move based on a location of the mobile base station. In other examples, the helicopter or the drone may be configured to function as a device for communicating with another base station.

In some deployments, the network device in the embodiments of the present disclosure may refer to a CU or a DU. Alternatively, the network device includes the CU and the DU. The gNB may also include an AAU.

The network device and the terminal device may be deployed on land, encompassing indoors or outdoors, and in handheld or vehicle-mounted forms. Alternatively, the network device and the terminal device may also be deployed on water. Alternatively, the network device and the terminal device may also be deployed on an aircraft, a balloon and a satellite in the air. Scenarios in which the network device and the terminal device are located are not limited in the embodiments of the present disclosure.

## Sidelink communication under different network coverage cases

Sidelink communication refers to a communication technology based on a sidelink. The sidelink communication may be, for example, device to device (D2D) communication or vehicle to everything (V2X) communication. Communication data in a conventional cellular system is received or transmitted between a terminal device and a network device, while the sidelink communication supports direct transmission of communication data between terminal devices. Compared with conventional cellular communication, the direct transmission of communication data between terminal devices may have higher spectrum efficiency and a lower transmission delay. For example, the sidelink communication technology is used in the V2X system.

The sidelink communication may be classified, depending on a network coverage case of the terminal device, into sidelink communication within the network coverage, sidelink communication within partial network coverage, and sidelink communication outside the network coverage.

FIG. 2 is an example diagram illustrating a scenario of sidelink communication within network coverage. In the scenario shown in FIG. 2, two terminal devices 120a are located within coverage of a network device 110. Therefore, the two terminal devices 120a may receive configuration signaling of the network device 110 (the configuration signaling in the present disclosure may also be replaced with configuration information), and determine sidelink configuration according to the configuration signaling of the network device 110. After performing the sidelink configuration, the two terminal devices 120a may perform sidelink communication on the sidelink.

FIG. 3 is an example diagram illustrating a scenario of sidelink communication within partial network coverage. In the scenario shown in FIG. 3, a terminal device 120a performs sidelink communication with the terminal device 120b. The terminal device 120a is located within coverage of the network device 110, so that the terminal device 120a may receive configuration signaling of the network device 110, and determine sidelink configuration according to configuration signaling of the network device 110. A terminal device 120b is located outside the network coverage and is incapable of receiving the configuration signaling of the network device 110. In such a case, the terminal device 120b may determine the sidelink configuration according to pre-configuration information and/or information carried in a physical sidelink broadcast channel (PSBCH) transmitted by the terminal device 120a located within the network coverage. After performing the sidelink configuration, both the terminal device 120a and the terminal device 120b may perform sidelink communication on the sidelink.

FIG. 4 is an example diagram illustrating a scenario of sidelink communication outside the network coverage. In the scenario shown in FIG. 4, two terminal devices 120b are located outside the network coverage. In such a case, the two terminal devices 120b may determine sidelink configuration according to pre-configuration information. After performing the sidelink configuration, the two terminal devices 120b may perform sidelink communication on the sidelink.

## Sidelink communication based on a central control node

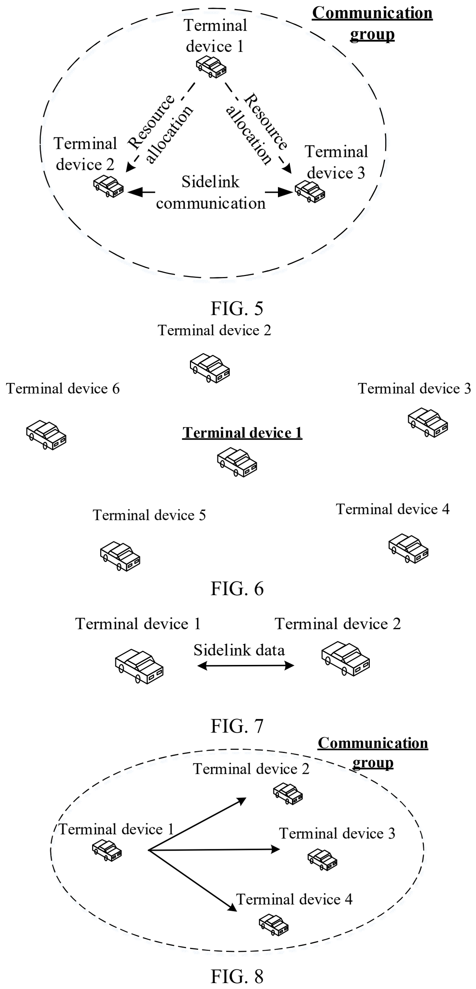

FIG. 5 is an example diagram illustrating a scenario of sidelink communication based on a central control node. In the sidelink communication scenario, multiple terminal devices may constitute a communication group, and the communication group includes a central control node therein. The central control node may be a terminal device in the communication group (e.g., terminal device 1 in FIG. 5), and the terminal device may also be called a cluster header (CH) terminal device. The central control node may be responsible for achieving one or more of the following functions: establishment of the communication group, addition or removal of a group member in the communication group, resource coordination within the communication group, allocation of sidelink transmission resources to other terminal devices, reception of sidelink feedback information from other terminal devices, and resource coordination with other communication groups.

## Mode of sidelink communication

Some standards or protocols (e.g., a 3rd Generation Partnership Project (3GPP)) define two kinds of modes of sidelink communication: a first mode and a second mode.

In the first mode, a resource of the terminal device is allocated by the network device, and the resource mentioned in the present disclosure may also be referred to as a transmission resource, such as a time-frequency resource. The terminal device may transmit data on the sidelink according to the resource allocated by the network device. The network device may allocate a resource for a single transmission to the terminal device, or a resource for a semi-static transmission to the terminal device. The first mode may be applied to a scenario in which there is coverage of the network device, such as the scenario shown in FIG. 2. In the scenario shown in FIG. 2, the terminal device 120a is located within the network coverage of the network device 110, so that the network device 110 may allocate a resource used in a sidelink transmission process to the terminal device 120a.

In the second mode, the terminal device may autonomously select one or more resources from a resource pool (RP). Subsequently, the terminal device may perform sidelink transmission according to the selected resource(s). For example, in the scenario shown in FIG. 4, the terminal device 120b is located outside coverage of a cell. Therefore, the terminal device 120b may autonomously select resource(s) from a preconfigured resource pool to perform the sidelink transmission. Alternatively, in the scenario shown in FIG. 2, the terminal device 120a may also autonomously select one or more resources from a resource pool configured by the network device 110 to perform the sidelink transmission.

## Data transmission mode of sidelink communication

Some sidelink communication systems (such as long term evolution vehicle to everything (LTE-V2X)) support a broadcast-based data transmission mode (referred to as broadcast transmission for short hereinafter). For the broadcast transmission, a receiver terminal may be any device around a transmitter. For example, in FIG., terminal device 1 is the transmitter, and a receiver terminal corresponding to the transmitter is any one of terminal devices (such as terminal device 2 to terminal device 6 shown in FIG. 6) around the terminal device 1.

In addition to the broadcast transmission, some communication systems also support a unicast-based data transmission mode (referred to as unicast transmission for short hereinafter) and/or a multicast-based data transmission mode (referred to as multicast transmission for short hereinafter). For example, new radio vehicle to everything (NR-V2X) is expected to support autonomous driving. Autonomous driving places higher demands on data interaction between vehicles. For example, data interaction between vehicles demands higher throughput, lower delay, higher reliability, larger coverage, a more flexible resource allocation manner. Therefore, the unicast transmission and the multicast transmission are introduced in the NR-V2X in order to enhance data interaction performance between vehicles.

For the unicast transmission, the receiver terminal is generally only one terminal device. For example, in FIG. 7, the unicast transmission is performed between the terminal device 1 and the terminal device 2. The terminal device 1 may be the transmitter and the terminal device 2 may be the receiver terminal. Alternatively, terminal device 1 may be the receiver terminal and terminal device 2 may be the transmitter.

For the multicast transmission, the receiver terminal may be a terminal device in one communication group. Alternatively, the receiver terminal may be a terminal device located within a certain transmission distance. For example, in FIG. 8, the communication group consists of the terminal device 1, the terminal device 2, a terminal device 3 and a terminal device 4. If the terminal device 1 transmits data, all other terminal devices in the group (the terminal device 2 to the terminal device 4) may be receiver terminals.

## Slot structure of sidelink communication

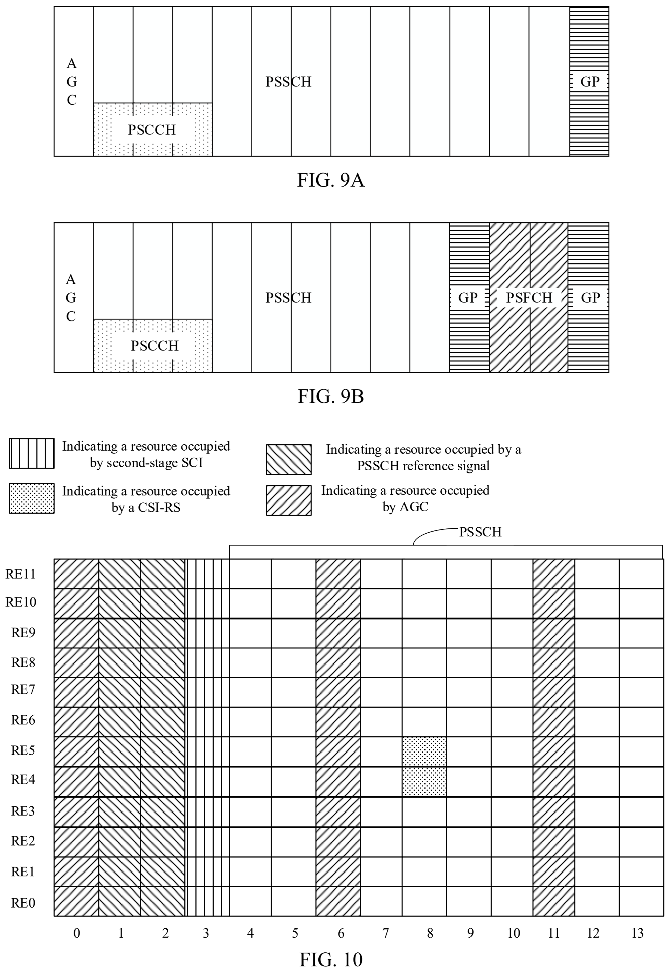

A frame structure, a subframe structure or a slot structure in the sidelink communication may be defined in the communication system. Multiple slot structures are defined in some sidelink communication systems. For example, two slot structures are defined in an NR sidelink (NR SL) system. Referring to FIG. 9A, one of the two slot structures does not include a physical sidelink feedback channel (PSFCH); and referring to FIG. 9B, the other of the two slot structures includes the PSFCH.

In the NR SL, a second sidelink symbol of a slot may be a starting position of a physical sidelink control channel (PSCCH) in a time domain, and the PSCCH may occupy two or three symbols in the time domain (the symbols mentioned here may all refer to orthogonal frequency division multiplexing (OFDM) symbols). The PSCCH may occupy multiple physical resource blocks (PRBs) in a frequency domain. For example, the number of PRBs occupied by the PSCCH may be selected from the following values: {10, 12 15, 20, 25}.

In a general case, in order to reduce complexity of the terminal device performing blind detection on the PSCCH, only one symbol number and one PRB number are configured for the PSCCH in one resource pool. Furthermore, since a sub-channel is defined as a minimum granularity for resource allocation of a physical sidelink shared channel (PSSCH) in the NR SL, the number of PRBs occupied by the PSCCH must be less than or equal to the number of PRBs contained within one sub-channel in the resource pool.

Referring to FIG. 9A, in the NR-SL, for a slot structure not including the PSFCH, a second sidelink symbol of the slot may be a starting position of the PSSCH in the time domain. A last sidelink symbol of the slot is used as a guard period (GP), the remaining symbols may be mapped to the PSSCH, and the GP may also be called as a guard symbol. A first sidelink symbol of the slot may be a repetition of the second sidelink symbol. Generally speaking, a terminal device as the receiving side may use the first sidelink symbol as a symbol for automatic gain control (AGC). Therefore, data on the first sidelink symbol is usually not used for data demodulation. The PSSCH may occupy K sub-channels in the frequency domain, and each sub-channel may include M consecutive PRBs (a value of K and a value of M may be predefined in a protocol, pre-configured, or configured by the network device, or depend on an implementation of the terminal device).

FIG. 9B illustrates a slot structure including the PSFCH, and FIG. 9B schematically illustrates positions of symbols occupied by the PSFCH, the PSCCH, and the PSSCH in a slot. The main difference between the slot structure and that of FIG. 9A is that a second to last symbol and a third to last symbol in the slot are used for transmitting the PSFCH, and a symbol before the symbols used for transmitting the PSFCH is also used as a GP (or guard symbol). It can be seen from the slot structure illustrated in FIG. 9B that, in the slot, a last symbol is used as a GP, the second to last symbol is used for PSFCH transmission, and data on the third to last symbol is the same as data on the second to last symbol for the PSFCH transmission. That is, the third to last symbol is used as a symbol for AGC, and a fourth to last symbol having a same function as the last symbol is also used as the GP. Furthermore, the first symbol in the slot is used as AGC, and data on the first symbol is the same as data on the second symbol in the slot. The PSCCH occupies 3 symbols, and the remaining symbols may be used for PSSCH transmission.

**Channel state information reference signal**

In order to better support the unicast communication, the NR SL system supports a CSI-RS (also called sidelink channel state information reference signal, SL CSI-RS). It is stipulated that the SL CSI-RS is transmitted only when the following three conditions are satisfied in the NR SL system.

First condition: the terminal device is required to transmit a PSSCH corresponding to the SL CSI-RS, that is, the terminal device cannot transmit the SL CSI-RS only.

Second condition: sidelink channel state information (CSI) reporting is activated via high-level signaling.

Third condition: in a case where the sidelink CSI reporting is activated via the high-level signaling, a corresponding bit in second-stage sidelink control information (also called second-stage SCI) transmitted by the terminal device triggers the sidelink CSI reporting.

The maximum number of ports supported by the SL CSI-RS is two. In a case where two ports are configured, SL CSI-RSs of different ports are multiplexed on two adjacent resource elements (REs) of a same sidelink symbol in a code division manner. A number of respective SL CSI-RSs of each port in one PRB is 1, i.e., with density being 1. Therefore, within one PRB, the SL CSI-RS will appear on at most one sidelink symbol, and a specific position of the sidelink symbol is determined by the terminal device transmitting SL CSI-RS.

Generally, in order to avoid affecting resource mapping of the PSCCH and the second-stage SCI, the SL CSI-RS cannot be located in a same sidelink symbol as the PSCCH and the second-stage SCI.

Furthermore, channel estimation accuracy of a sidelink symbol where a PSSCH demodulation reference signal (DMRS) is located is relatively high, and the SL CSI-RSs of the two ports shall need to occupy two consecutive REs in the frequency domain. Therefore, the SL CSI-RS and the PSSCH DMRS cannot be transmitted on a same sidelink symbol.

In some cases, a position of the sidelink symbol occupied by the SL CSI-RS may be indicated by an sl-CSI-RS-FirstSymbol parameter in proximity communication 5 (PC5) radio resource control (RRC). Furthermore, a position of a first RE occupied by the SL CSI-RS within one PRB is indicated by an "sl-CSI-RS-FreqAllocation" parameter in the PC5 RRC. If the SL CSI-RS corresponds to one port, the parameter is a bitmap with a length of 12 bits corresponding to 12 REs in one PRB. If the SL CSI-RS corresponds to two ports, the parameter is a bitmap with a length of 6 bits. In this case, the SL CSI-RS occupies two REs that are $2f(1)$ and $2f(1)+1$, where $f(1)$ indicates an identifier of a bit with a value of 1 in the above bitmap.

A frequency-domain position occupied by the SL CSI-RS is also determined by the terminal device transmitting the SL CSI-RS. Moreover, it shall be noted that a determined frequency-domain position of the SL CSI-RS cannot conflict with a frequency-domain position occupied by a phase-tracking RS (PT-RS).

FIG. 10 is a schematic diagram illustrating time-frequency resources occupied by the SL CSI-RS. Referring to FIG. 10, assuming that the number of ports corresponding to the SL CSI-RS is two, sl-CSI-RS-FirstSymbol indicates that the SL CSI-RS occupies position 8 of sidelink symbol, and sl-CSI-RS-FreqAllocation indicates that a position of a first RE occupied by the SL CSI-RS within one PRB is $[b_5, b_4, b_3, b_2, b_1, b_0]$ = [0,0,0,1,0,0].

## Multi-beam system

A design goal of the communication system (e.g., NR) includes large-bandwidth communication in a high-frequency band (e.g., a frequency band above 6 GHz). In a case where operating frequency becomes higher, path loss during transmission will increase, thus affecting a coverage capability of a high-frequency system. Therefore, in order to effectively ensure coverage of the high-frequency band, an effective technical solution is based on a massive antenna array (massive multiple-in multiple-out, massive MIMO) so as to form a shaped beam with a greater gain, overcome propagation loss and ensure coverage of the communication system.

Currently, the most common massive antenna array is a millimeter-wave antenna array. Since a wavelength emitted by the millimeter-wave antenna array is relatively short, spacing between antenna elements of the antenna array may be relatively small. An aperture of the antenna element may be relatively small, so that more physical antenna elements may be integrated into a two-dimensional antenna array with a limited size.

Furthermore, due to the limited size of the millimeter-wave antenna array, digital beamforming cannot be employed in consideration of factors such as hardware complexity, cost overhead, and power consumption. Instead, analog beamforming is usually employed, which may enhance coverage of the network while reducing implementation complexity of a device.

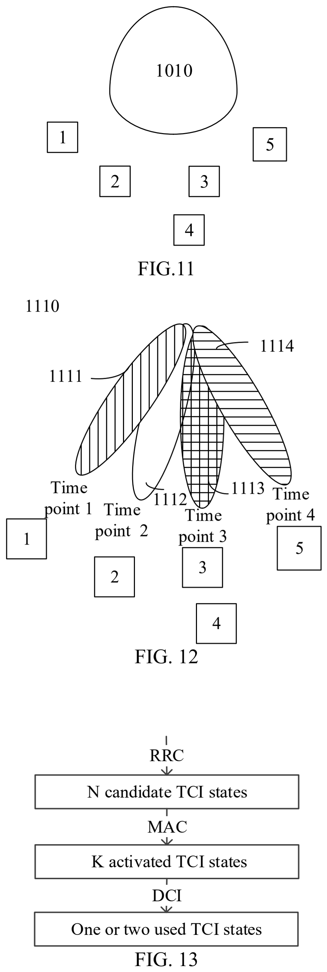

For ease of understanding of the multi-beam system, by taking a scenario of communication between the network device and the terminal as an example, a communication process based on beam communication will be described below with reference to FIG. 11 and FIG. 12.

Referring to FIG. 11, in a conventional communication system (e.g., a 2G, 3G or 4G system), a wide beam 1010 is generally employed to cover an entire cell (or "sector"). In this way, terminals in the cell (e.g., terminal device 1 to terminal device 5) may communicate with the network device via the wide beam at each time point, for example, to obtain transmission resources allocated by the network device.

Referring to FIG. 12, in a newer communication system (e.g., 5G system or NR system), a multi-beam system 1110 may be employed to cover an entire cell. In other words, each beam in the multi-beam system (e.g., a beam 1111 to a beam 1114) covers a small area in the cell, and the effect of multiple beams covering the entire cell is achieved in a beam sweeping manner.

During a process of beam sweeping, different beams are utilized at different time points to cover different areas within the cell. For example, at a time point 1, the communication system may cover an area where a terminal device 1 is located with a beam 1111. At a time point 2, the communication system may cover an area where a terminal device 2 is located with a beam 1112. At a time point 3, the communication system may cover an area where a terminal device 3 and a terminal device 4 are located with a beam 1113. At a time point 4, the communication system may cover an area where a terminal device 5 is located with a beam 1114.

For the multi-beam system, transmitted energy may be more focused by utilizing a narrow beam, and thus a farther distance will be covered. However, because the beam is relatively narrow, each beam may only cover partial area within the cell. Therefore, the multi-beam system may be understood as "trading time for space."

Analog beamforming may be employed not only in the network device but also in the terminal device. Furthermore, analog beamforming may be employed not only for transmitting a signal (called a transmit beam), but also for receiving a signal (called a receive beam).

Currently, different beams are identified by different signals associated with (or carried in) these beams. For example, different synchronization signal and physical broadcast channel (PBCH) blocks (SSBs) are transmitted on some different beams, and the terminal device may distinguish different beams through different SSBs. For another example, different CSI-RSs are transmitted on some different beams, and the terminal device may identify different beams through CSI-RS signals and/or CSI-RS resources.

In a multi-beam system, a physical downlink control channel (PDCCH) and a physical downlink shared channel (PDSCH) may be transmitted via different downlink transmit beams.

For some communication systems (such as communication systems with carrier frequencies below 6 GHz), an analog beam is not usually utilized by the terminal device. In such communication systems, the terminal device may employ an omni-direction antenna (or a nearly omni-direction antenna) to receive signals transmitted by different downlink transmit beams of the network device.

For some communication systems (such as millimeter wave systems), the analog beam may be utilized by the terminal device. In such communication systems, the terminal device may utilize a downlink receive beam to receive a signal transmitted via a corresponding downlink transmit beam. In this case, beam indication information may be used to assist the terminal device in determining one or more of the following information: relevant information of the transmit beam of the network device, and relevant information of the receive beam corresponding to the terminal device.

In some communication systems (such as NR-related protocols), the beam itself is not indicated by the beam indication information directly, but is indicated by quasi co-located (QCL) between signals. At the terminal device side, a determination of receiving a corresponding channel/signal is also based on a QCL assumption.

## QCL indication/assumption of downlink transmission

To enhance a receiving performance, when receiving a signal, the terminal device may improve a receiving algorithm by utilizing a characteristic of transmission environment corresponding to data transmission. For example, a design and parameter of a channel estimator may be optimized by the terminal device utilizing a statistical characteristic of the channel. In some communication systems (e.g., an NR system), the characteristic of the transmission environment corresponding to the data transmission may be represented by QCL information (QCL-Info).

When different transmission and receiving points (TRP)/panels/beams are utilized for a downlink data transmission, the characteristic of the transmission environment corresponding to the data transmission may also change. Therefore, in some communication systems (e.g., the NR system), in a case where a downlink control channel or a downlink data channel needs to be transmitted, the network device may indicate corresponding QCL information to the terminal device through a transmission configuration indicator (TCI) state.

One TCI state may include following configuration information: TCI state identity (ID), QCL information 1, and QCL information 2 (optional). The TCI state ID may be used to identify the TCI state.

The QCL information may include following information: QCL type configuration and QCL reference signal configuration. The QCL type configuration may be one of QCL-Type A, QCL-Type B, QCL-Type C and QCL-Type D. The QCL reference signal configuration may include a cell identifier (cell ID) where a reference signal is located, a bandwidth part (BWP), and an identifier of the reference signal (such as a CSI-RS resource identifier or an SSB index).

If both the QCL information 1 and the QCL information 2 are configured, a QCL type of at least one of the QCL information 1 or the QCL information 2 must be one of the QCL-Type A, the QCL-Type B and the QCL-Type C, and a QCL type of the other QCL information must be the QCL-Type D.

Different QCL type configurations are defined as follows.

QCL-Type A: {Doppler shift, Doppler spread, average delay, delay spread}

QCL Type B: {Doppler shift, Doppler spread}
QCL Type C: {Doppler shift, average delay}
QCL Type D: {spatial reception parameter}.

In the NR system, the network device may indicate a corresponding TCI state for the downlink signal or the downlink channel. If the network device configures, through the TCI state, a QCL reference signal of a target downlink channel or a target downlink signal as the SSB or the CSI-RS, and the QCL type configuration is the QCL-Type A, the QCL-Type B or the QCL-Type C, the terminal device may assume that a large-scale parameter of the target downlink signal is the same as that of the SSB or CSI-RS. Specific content of the large-scale parameter may be determined based on the QCL type configuration.

Similarly, if the network device configures, through the TCI state, the QCL reference signal of the target downlink channel or the downlink signal as the SSB or the CSI-RS, and the QCL type configuration is the QCL-Type D, the terminal device may utilize a same receiving beam as that for receiving the SSB or the CSI-RS (i.e., a same spatial receiving parameter (spatial Rx parameter)) to receive the target downlink signal. Generally speaking, at the network device side, the target downlink channel (or the target downlink signal) and the SSB or the CSI-RS to which the target downlink channel refers may be transmitted via a same TRP/panel/beam. If TRPs/panels/beams for transmitting two downlink signals (or downlink channels) are different, different TCI states are usually configured for the two downlink signals (or downlink channels).

For a downlink control channel, a TCI state of a CORESET corresponding to the downlink control channel may be indicated by RRC signaling or the combination of RC signaling and media access control (MAC) signaling.

For the downlink data channel (i.e., PDSCH), referring to FIG. 13, a set of TCI states available for the downlink data channel may be indicated by RRC signaling, and some of the TCI states may be activated by MAC layer signaling. Finally, one or two TCI states are indicated from the activated TCI states through a TCI state indication domain in the DCI for a downlink data channel scheduled by the DCI.

In order to enhance the transmission rate of the sidelink system, it is possible to consider adopting a beam-based transmission manner in the sidelink system. For example, the sidelink system may be extended to the millimeter-wave frequency band, and then analog beamforming may be employed for sidelink transmission to enhance the transmission rate and coverage of the network in the sidelink system.

In some scenarios (e.g., downlink communication systems in NR), indication information for a TCI state is carried in the DCI. The indication information is used for indicating beam information used by a PDSCH scheduled by the DCI. Alternatively, the indication information is used for the terminal to determine a receive beam for receiving the PDSCH scheduled by the DCI. A time interval between the DCI and the PDSCH is required to be greater than a first threshold. It is mainly considered that a corresponding processing time is required for the terminal to: receive the DCI, obtain the indication information to determine the receive beam, and receive the PDSCH using the receive beam. Therefore, a first threshold is associated with the processing time of the terminal. In some implementations, a value of the first threshold may be, for example, duration corresponding to 7, 14, or 28 time-domain symbols.

If the beam-based transmission mode is employed in the sidelink system, a terminal for transmitting CSI-RS may perform the sidelink transmission based on the transmit beam; and/or, a terminal device for receiving CSI-RS may perform the sidelink reception based on the receive beam. In some cases, the transmit beam may also be called a spatial domain transmission filter, a spatial domain transmission filter at the transmitting end, a spatial domain transmission filter for transmitting, or other names. Correspondingly, the receive beam may also be called a spatial domain reception filter, a spatial domain transmission filter at the receiving end, a spatial domain transmission filter for receiving, or other names. In other cases, the transmit beam may also be referred to as a spatial domain transmission parameter, and correspondingly, the receive beam may also be referred to as a spatial domain reception parameter. For ease of understanding, the embodiments of the present disclosure are mainly described by taking the transmit beam/receive beam as an example. The transmit beam, the spatial domain transmission filter or the spatial domain transmit parameter may be used interchangeably, and the receive beam, the spatial domain reception filter or the spatial domain reception parameter may be used interchangeably.

## Resource pre-emption mechanism and resource re-evaluation mechanism

Some communication protocols (e.g., LTE SL) stipulate that after selecting transmission resources, the terminal device shall transmit data on these resources. However, it is possible that two terminals select a same transmission resource. In this case, a resource conflict will occur and system performance will be reduced. In order to solve this problem, the resource pre-emption mechanism and the resource re-evaluation mechanism are introduced in NR SL. In this way, the terminal may determine whether there is a resource conflict with other terminals before utilizing selected resources. If there is no conflict, the selected transmission resources may remain available. If there is a resource conflict, avoidance and resource re-selection are required according to a corresponding mechanism, so as to avoid the resource conflict.

Currently, the resource re-evaluation mechanism is supported in NR SL. After a terminal completes the resource selection, a resource that has been selected but not yet indicated via the transmitted SCI may still be reserved by other terminals with burst aperiodic services, resulting in a resource collision. In order to solve the problem, the resource re-evaluation mechanism is proposed. That is, after completing the resource selection, the terminal continues to sense the SCI and conducts at least one re-evaluation of the resource that has been selected but not yet indicated. Furthermore, for a resource that has been selected and already indicated via the transmitted SCI, the resource pre-emption mechanism is proposed.

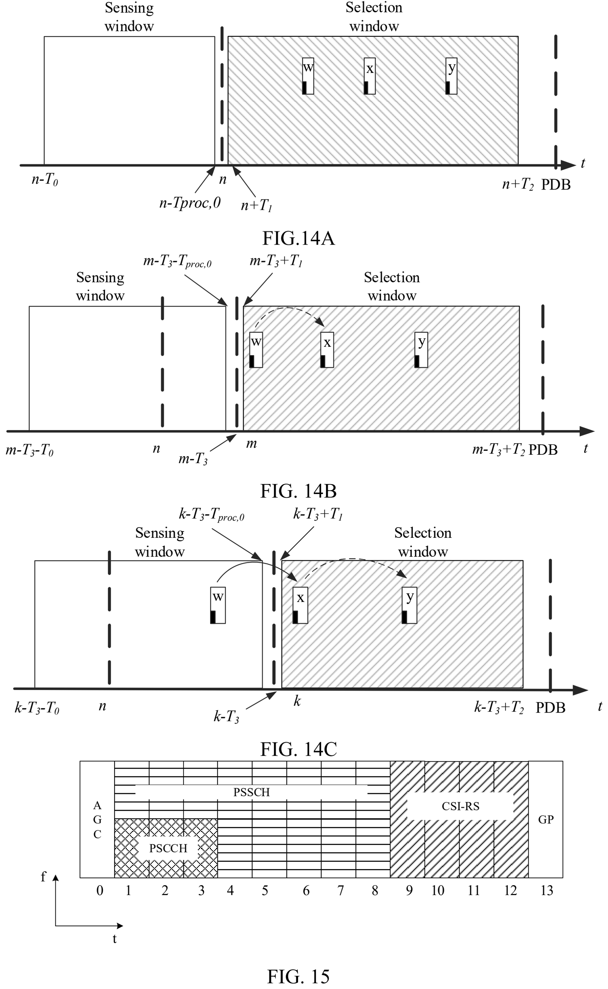

The resource re-evaluation mechanism will be described below referring to FIG. 14A and FIG. 14B. Referring to FIG. 14A, the terminal performs the resource selection in a slot n, and determines a candidate resource set $S_A$ in a selection window according to a sensing result. The terminal selects a resource w, a resource x and a resource y in the $S_A$, and the resource w is located in a slot *m*. If a resource is not reserved through an SCI indication, re-evaluation detection is required before the use of the resource. In the example, w is a first resource selected by the terminal, and the resource is not indicated by the SCI for reservation. Therefore, the terminal needs to perform the re-evaluation detection before performing data transmission using the resource w. Therefore, a UE performs resource sensing once in a slot m - $T_3$ (i.e., determines a resource selection window and a sensing window), and performs resource exclusion in the resource selection window to obtain a candidate resource set $S_A'$, as illustrated in FIG. 14B.

If the resource w is not located in the candidate resource set $S_A'$, it means that the resource w conflicts with a resource reserved by other users and is excluded from the candidate resource set $S_A'$. Therefore, the terminal needs to reselect a resource from the candidate resource set $S_A'$ to replace the resource w originally selected. This process is called a re-evaluation detection process. It shall be understood that in a case where the re-evaluation detection is performed in the slot m - $T_3$, the resources x and y pre-selected also are not reserved through the SCI indication. Therefore, the re-evaluation detection may also be performed on the resource x and the resource y at the same time, and the detection process is the same as the process of detecting the resource w.

Currently, a pre-emption mechanism (i.e., the resource pre-emption mechanism) is supported in NR SL. After completing the resource selection in the candidate resource set $S_A$, the terminal still continuously senses SCI. If a time-frequency resource that has been selected and already indicated via the transmitted SCI satisfies the following three conditions, the resource re-selection will be triggered.

First condition: a reserved resource in the detected SCI overlaps with a resource that has been selected and indicated by the terminal. The resource overlap includes complete overlap and partial overlap.

Second condition: a reference signal receiving power (RSRP) of a PSCCH corresponding to the SCI detected by the terminal or a RSRP of a PSSCH scheduled by the PSCCH is greater than an SL RSRP threshold.

Third condition: a priority carried in the detected SCI is higher than a priority of data to be transmitted by the terminal.

The resource pre-emption mechanism will described below with reference to FIG. 14A and FIG. 14C. Referring to FIG. 14A, the terminal performs the resource selection in the slot n, and determines the candidate resource set $S_A$ in the selection window according to the sensing result. The terminal selects the resource w, the resource x and the resource y in the $S_A$. The resource w is located in the slot $m$, and the resource x is located in a slot $k$. Referring to FIG. 14C, SCI transmitted by the terminal in the resource w has indicated that the resource x is reserved, so that the terminal needs to perform a pre-emption detection before using the resource x. The terminal performs resource sensing once in slot $k$ - $T_3$ to determine a candidate resource set $S'_A$. If the resource x is not located in the candidate resource set $S'_A$, it is further determined that whether the absence of the resource x from the candidate resource set $S'_A$ is caused by an indication of SCI carrying a high priority (i.e., the first condition to the third condition are satisfied). If the first condition to the third condition are satisfied, the terminal performs the resource reselection and reselects a resource from the candidate resource set $S'_A$ to replace the resource x originally selected.

Currently, only one CSI-RS resource can be contained in one slot in a known communication system (e.g., NR SL), as illustrated in FIG. 10. In a case where the terminal for transmitting CSI-RS needs to transmit multiple CSI-RSs, the multiple CSI-RSs can only be transmitted respectively in multiple slots, resulting in low transmission efficiency of the CSI-RSs.

For example, in a process of selecting a beam, the terminal transmitting the CSI-RSs needs to transmit CSI-RSs corresponding to different beams among multiple beams utilizing the multiple CSI-RS resources, so that a terminal for receiving CSI-RS may select a target beam from corresponding multiple beams according to the multiple CSI-RSs. In this case, if the CSI-RS transmission mechanism illustrated in FIG. 10 is still used, the terminal for transmitting CSI-RS may only transmit the CSI-RSs corresponding to the multiple beams through the multiple slots respectively, resulting in a high delay in the beam selection process and low transmission efficiency of CSI-RSs.

Therefore, in order to solve the problem, the embodiments of the present disclosure provide a method of transmitting the CSI-RS. In the method, one slot may include multiple resources available for transmitting the CSI-RSs (referred to as "CSI-RS resources" for short). In this way, the terminal transmitting the CSI-RSs may transmit multiple CSI-RSs in one slot, which helps to improve the transmission efficiency of the CSI-RSs.

In some implementations, each CSI-RS resource may occupy K time-domain symbols, and K is a positive integer greater than or equal to 1. For example, K=1 or K=2.

For ease of understanding, a CSI-RS transmission mechanism in the embodiments of the present disclosure will described below with reference to FIG. 15. FIG. 15 is a schematic diagram illustrating CSI-RS resources included in one slot in the embodiments of the present disclosure. Referring to FIG. 15, a slot may include 4 resources available for transmitting the CSI-RSs, and each resource available for transmitting the CSI-RS may include one time-domain symbol. Accordingly, time-domain symbols occupied by the 4 resources available for transmitting the CSI-RSs include a time-domain symbol 9 to a time-domain symbol 12. In this case, the terminal transmitting the CSI-RSs may transmit 4 CSI-RSs on 4 CSI-RS resources.

In some scenarios, the terminal for transmitting CSI-RS carries indication information of a CSI-RS resource in first-stage SCI or second-stage SCI to indicate a CSI-RS resource of a CSI-RS transmitted simultaneously with the SCI, so that the terminal for receiving CSI-RS may perform measurement and reporting. Taking the SCI carried in the first-stage SCI as an example, the terminal for receiving CSI-RS needs to perform corresponding processing within a period of time after receiving the SCI and before receiving a CSI-RS corresponding to the SCI. For example, the terminal for receiving CSI-RS needs to decode the first-stage SCI within the period of time to obtain the indication information of the CSI-RS resource, determine a corresponding receive beam according to the indication information of the CSI-RS resource, and switch to the receive beam for ease of subsequent reception for CSI-RS. In other words, there is a period of time between a resource for transmitting the SCI and the CSI-RS resource.

In some implementations, the period of time between the resource for transmitting the SCI and the CSI-RS resource may be determined based on the first threshold value. In other words, a time interval between the resource for transmitting the SCI and the CSI-RS resource needs to be greater than or equal to the first threshold value. With continued reference to FIG. 15, for example, in a case where the first threshold value is duration corresponding to 7 time-domain symbols, if the SCI is carried by the PSCCH, an ending position of a last time-domain symbol for PSCCH is an ending position of time-domain symbol 3. In this case, symbols that are greater than or equal to 7 time-domain symbols away from the time-domain symbol 3 are time-domain symbol 11 to time-domain symbol 13. The time-domain symbol 13 is used as a guard symbol and may be ignored. Therefore, only CSI-RSs transmitted on the time-domain symbol 11 and the time-domain symbol 12 may be successfully received by a receiving end. For CSI-RSs transmitted on the time-domain symbols 9 and 10, since their time-domain positions away from the time-domain position of PSCCH are less than the first threshold value, the receiving end may not receive the CSI-RSs in time, and thus may fail to perform processes of beam training and beam selection based on the CSI-RSs.

Based on the above description, it can be seen that even if it is stipulated that one slot contains multiple CSI-RS resources, a number of resources available for transmitting the CSI-RSs in one slot is very limited due to the limitation between a time-domain position of the indication information of the CSI-RS resource and a time-domain position of the CSI-RS resource (that is, the time-domain position of the indication information of the CSI-RS resource away from the time-domain position of CSI-RS resource are greater than or equal to the first threshold value), thereby limiting the transmission efficiency of the CSI-RSs. Therefore, in order to solve the problem, the embodiments of the present disclosure further provide a sidelink communication method, which will described below in combination with Embodiment 1.

Embodiment 1

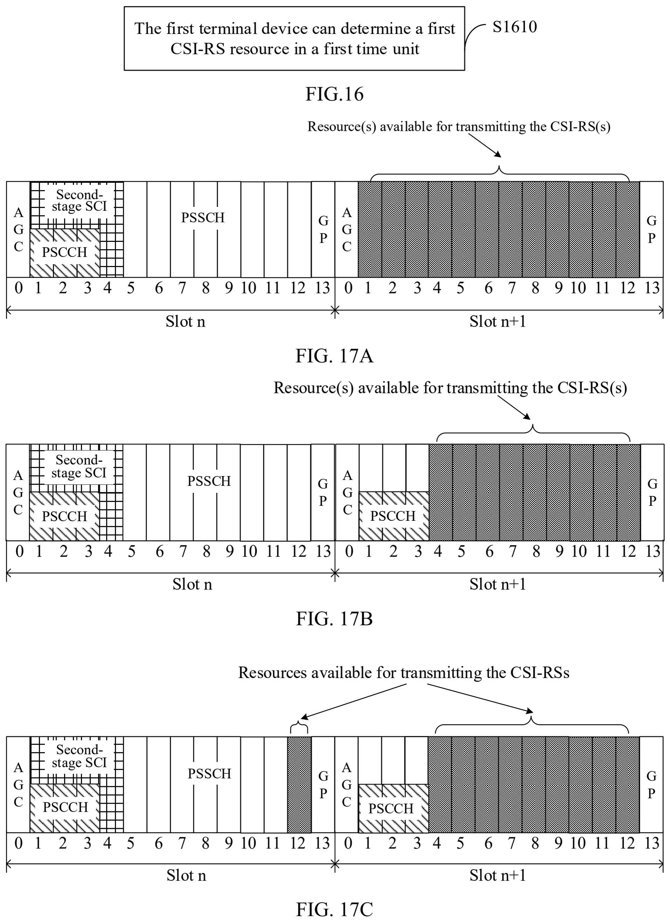

In the embodiments of the present disclosure, multiple consecutive slots contained may be referred to as a first time unit. Accordingly, a first terminal device may determine a first CSI-RS resource in the first time unit (referring to step S1610 in FIG. 16). Compared with a solution in which a terminal device determines a CSI-RS resource in a single slot, a larger number of resources available for transmitting CSI-RSs are contained in the first time unit, which helps to improve transmission efficiency of the CSI-RSs.

The first terminal device may be a terminal for transmitting CSI-RS or a terminal receiving CSI-RS, which is not limited in the embodiments of the present disclosure.

The first time unit may include multiple consecutive slots. The first time unit may also be understood as a slot structure based on multiple slots. In some implementations, the first time unit may be referred to as an aggregate slot, slot aggregation, a super slot, a slot group, or multiple slots (multi-slot).

In some implementations, the multiple slots included in the first time unit may be multiple consecutive physical slots. In some other implementations, the multiple slots included in the first time unit may be multiple consecutive slots available for sidelink transmission. In some other implementations, the plurality of slots included in the first time unit may be multiple consecutive slots in a resource pool.

The first CSI-RS resource may be one resource available for transmitting the CSI-RS in the first time unit. Certainly, in the embodiments of the present disclosure, the number of CSI-RS resources included in the first time unit may be one or more. As described above, one CSI-RS resource may include one or more time-domain symbols.

For ease of understanding, the first time unit in the embodiments of the present disclosure will described below by taking one slot in the first time unit (referred to as the "first slot" hereinafter) as an example. In the embodiments of the present disclosure, the first slot may include resource(s) available for transmitting CSI-RS(s) (e.g., the first CSI-RS resource). In other words, the first slot may be used to transmit the CSI-RS(s).

In some implementations, the first slot may be used only for transmitting the CSI-RS. The term "only used for transmitting the CSI-RS" may be understood as one or more of: other time-domain symbols except the AGC in the first slot being used to transmit the CSI-RS; other symbols except the guard symbol in the first slot being used to transmit the CSI-RS; other symbols except the AGC and the guard symbol in the first slot being used to transmit the CSI-RS; and all symbols ranging from the second time-domain symbol available for sidelink transmission in the first slot to a previous symbol of the guard symbol in the first slot being used to transmit the CSI-RS.

Referring to FIG. 17A, the first time unit may include two slots, i.e., slot n and slot n+1. The slot n+1 may be used as an example of the first slot. In the slot n+1, a second time-domain symbol available for sidelink transmission is time-domain symbol 1, and a guard symbol is time-domain symbol 13. Accordingly, in the slot n+1, time-domain symbols ranging from the time-domain symbol 1 to a previous time-domain symbol of the guard symbol (i.e., time-domain symbol 12) may all be used to transmit the CSI-RS(s).

In some implementations, the first slot may not be used to transmit the PSCCH. In other words, resources available for transmitting the PSCCH in the first slot may be used to transmit the CSI-RS. In other words, the resources for transmitting the PSCCH are not included in the first slot.

In the embodiments of the present disclosure, all resources available for transmitting the PSCCH in the first slot may be used to transmit the CSI-RS. Certainly, in the embodiments of the present disclosure, some of resources available for transmitting the PSCCH in the first slot may be used to transmit the CSI-RS.

With continued reference to FIG. 17A, the slot n+1 may be used as an example of the first slot. Time-domain symbols available for transmitting the PSCCH in the slot n+1 may include time-domain symbol 1 to time-domain symbol 3. In the slot n+1, time-symbols ranging from a second time-domain symbol to a previous symbol of a guard symbol may all be used to transmit the CSI-RS(s). That is, the time-domain symbol 1 to the time-domain symbol 3 in the slot n+1 may be used to transmit the CSI-RS.

In some implementations, the first slot may not be used to transmit second-stage SCI. In other words, resources available for transmitting the second-stage SCI in the first slot may be used to transmit the CSI-RS. In other words, the resources for transmitting the second-stage SCI is not included in the first slot.

In the embodiments of the present disclosure, all resources available for transmitting the second-stage SCI in the first slot may be used to transmit the CSI-RS. Certainly, in the embodiments of the present disclosure, some of resources available for transmitting the second-stage SCI in the first slot may be used to transmit the CSI-RS.

With continued reference to FIG. 17A, the slot n+1 may be used as an example of the first slot. The time-domain symbols available for transmitting the second-stage SCI in the slot n+1 may include the time-domain symbol 1 to time-domain symbol 4. In the slot n+1, symbols ranging from the second time-domain symbol to a previous symbol of the guard symbol may be all used to transmit the CSI-RS(s). That is, all time-domain symbols available for transmitting the second-stage SCI in the slot n+1 may be used to transmit the CSI-RS.

Referring to FIG. 17B, the first time unit may include two slots, i.e., slot n and slot n+1. The slot n+1 may be used as an example of the first slot. Time-domain symbols available for transmitting the second-stage SCI in the slot n+1 may include time-domain symbol 1 to time-domain symbol 4. Time-domain symbols available for transmitting the PSCCH in the slot n+1 may include the time-domain symbol 1 to time-domain symbol 3. In the slot n+1, symbols ranging from a next symbol of a last time-domain symbol contained in transmission resources of the PSCCH (i.e., the time-domain symbol 4) to a previous symbol of a guard symbol may all be used to transmit the CSI-RS(s). In other words, the time-domain symbol 4 available for transmitting the second-stage SCI in slot n+1 may be used to transmit the CSI-RS. That is, some of the time-domain symbols available for transmitting the second-stage SCI in the slot n+1 may be used to transmit the CSI-RS.

In some implementations, the first slot may not be used to transmit the PSSCH. In other words, resources available for transmitting the PSSCH in the first slot may be used to transmit the CSI-RS.

With continued reference to FIG. 17A, the slot n+1 may be used as an example of the first slot. The time-domain symbols available for transmitting the PSSCH in the slot n+1 may include time-domain symbol 1 to time-domain symbol 12. In the slot n+1, symbols ranging from the second time-domain symbol (i.e., the time-domain symbol 1) to the previous symbol of the guard symbol may all be used to transmit the CSI-RS(s). In other words, the time-domain symbols available for transmitting the PSSCH in the slot n+1 may be used to transmit the CSI-RS.

The roles of the time-domain symbols in the first slot in the embodiments of the present disclosure are described above. A time-domain position of a resource available for transmitting a CSI-RS in the first slot in the embodiments of the present disclosure will be described in combination with Examples 1 to 4. For ease of description, the resource available for transmitting the CSI-RS in the first slot are referred to as a "first time-domain resource" hereafter. In some implementations, part or all of the first CSI-RS resource described above belongs to the first time-domain resource. In other words, part or all of the first CSI-RS resource is within the first time-domain resource.

Example 1: a first time-domain resource is determined based on a time-domain resource available for transmitting the PSCCH in the first slot.

In some implementations, a starting position of the first time-domain resource may be determined based on the time-domain resource available for transmitting the PSCCH in the first slot. For example, the starting position of the first time-domain resource may be determined based on a starting position of the time-domain resource available for transmitting the PSCCH in the first slot. For another example, the starting position of the first time-domain resource may be the starting position of the time-domain resource available for transmitting the PSCCH in the first slot. In other words, the first time-domain resource starts from the starting position corresponding to the time-domain resource available for transmitting the PSCCH.

Certainly, in the embodiments of the present disclosure, the starting position of the first time-domain resource may be determined based on an ending position of the time-domain resource available for transmitting the PSCCH in the first slot. For example, the starting position of the first time-domain resource may be a starting position of a next symbol of the ending position of the time-domain resource available for transmitting the PSCCH in the first slot. In other words, the first time-domain resource starts from a starting position corresponding to the next symbol of the ending position of the time-domain resource available for transmitting the PSCCH.

With continued reference to FIG. 17A, the slot n+1 may be used as an example of the first slot. The time-domain symbols available for transmitting the PSCCH in the slot n+1 may include the time-domain symbol 1 to the time-domain symbol 3. In the slot n+1, the first time-domain resource includes the time-domain symbol 1 to the time-domain symbol 12. That is, the first time-domain resource starts from a starting position of the time-domain symbol 1. In other words, the first time-domain resource starts from the starting position corresponding to the time-domain resource available for transmitting the PSCCH.

It shall be noted that, in the embodiments of the present disclosure, if the time-domain resource available for transmitting the PSCCH is used to transmit the CSI-RS, the first slot may not be used to transmit the PSCCH. Instead, if the time-domain resource available for transmitting the PSCCH is not used to transmit the CSI-RS, the first slot may be used to transmit the PSCCH. Certainly, the first slot may not be used to transmit the PSCCH.

In some other implementations, the first time-domain resource is determined according to a first time-domain symbol after the time-domain resource available for transmitting the PSCCH. For example, the starting position of the first time-domain resource is determined according to a first time-domain symbol after the time-domain resource available for transmitting the PSCCH. For another example, the starting position of the first time-domain resource may be determined according to a starting position of the first time-domain symbol after the time-domain resource available for transmitting the PSCCH. For another example, the starting position of the first time-domain resource may be the starting position of the first time-domain symbol after the time-domain resource available for transmitting the PSCCH.

With continued reference to FIG. 17B, the slot n+1 may be used as an example of the first slot. Time-domain symbols available for transmitting the PSCCH in the slot n+1 may include time-domain symbol 1 to time-domain symbol 3. Therefore, time-domain symbol 4 is a first time-domain symbol after the time-domain symbol 3. In the slot n+1, the first time-domain resource include the time-domain symbol 4 to time-domain symbol 12. The starting position of the first time-domain resource may be a starting position of the time-domain symbol 4, i.e., the starting position of the first time-domain symbol after the time-domain resource available for transmitting the PSCCH.

It shall be noted that, in the embodiments of the present disclosure, the time-domain resource available for transmitting the PSCCH in the first slot may be used to transmit the PSCCH, or may not be used to transmit the PSCCH.

Certainly, a specific manner of determining the starting position of the first time-domain resource based on the time-domain resource available for transmitting the PSCCH is not limited in the embodiments of the present disclosure. For example, an ending position of the first time-domain resource may be determined based on an ending position of the time-domain resource available for transmitting the PSCCH in the first slot. For another example, the ending position of the first time-domain resource may be determined based on a certain position of the time-domain resource available for transmitting PSCCH in the first slot and an offset value. The offset value may be an integer greater than or equal to 0, and the offset value may be expressed as the number of time-domain symbols.

Furthermore, in the embodiments of the present disclosure, the first time-domain resource being determined based on the time-domain resource available for transmitting the PSCCH in the first slot may further include: that the starting position of the first time-domain resource may be determined based on the starting position (or ending position) of the time-domain resource available for transmitting the PSCCH in the first slot and the offset value; or that the ending position of the first time-domain resource may be determined based on the starting position or the ending position of the time-domain resource available for transmitting the PSCCH in the first slot and the offset value. The offset value may be an integer greater than or equal to 0, and the offset value may be expressed as the number of time-domain symbols. Certainly, in the embodiments of the present disclosure, any position of the first time-domain resource is determined based on the time-domain resource available for transmitting the PSCCH in the first slot, which is not limited in the embodiments of the present disclosure

Example 2: the first time-domain resource is determined based on the time-domain resource available for transmitting the second-stage SCI in the first slot.

In some implementations, the starting position of the first time-domain resource is determined based on the time-domain resource available for transmitting the second-stage SCI in the first slot. For example, the starting position of the first time-domain resource is determined based on a first time-domain symbol after the time-domain resource available for transmitting the second-stage SCI. For another example, the starting position of the first time-domain resource may be determined based on a starting position of the first time-domain symbol after the time-domain resource available for transmitting the second-stage SCI. For another example, the starting position of the first time-domain resource may be the starting position of the first time-domain symbol after the time-domain resource available for transmitting the second-stage SCI.

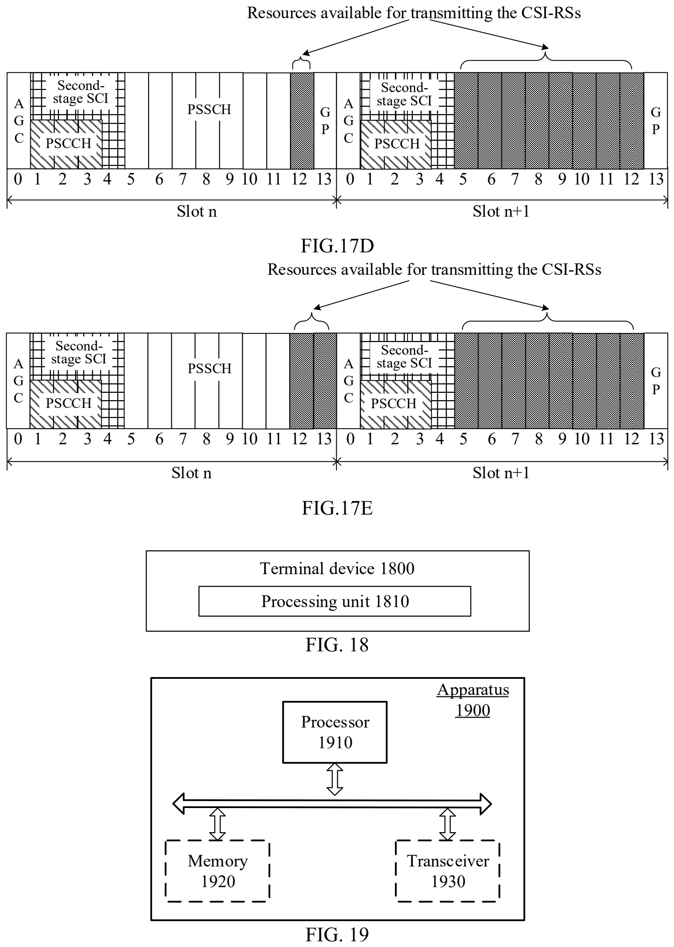

Referring to FIG. 17D, the first time unit may include two slots, i.e., slot n to slot n+1. The slot n+1 may be used as an example of the first slot. Time-domain symbols available for transmitting the second-stage SCI in the slot n+1 may include time-domain symbol 1 to time-domain symbol 4. Accordingly, a first time-domain symbol after the time-domain symbol 4 is time-domain symbol 5. In the slot n+1, the first time-domain resource include the time-domain symbol 5 to time-domain symbol 12. That is, a starting position of the first time-domain resource may be a starting position of the time-domain symbol 5, i.e., the starting position of the first time-domain symbol after the time-domain resource available for transmitting the second-stage SCI.

Certainly, in the embodiments of the present disclosure, the starting position of the first time-domain resource may be determined based on a first time-domain symbol among the time-domain resource available for transmitting the second-stage SCI. For another example, the starting position of the first time-domain resource may be determined based on the starting position of the first time-domain symbol among the time-domain resource available for transmitting the second-stage SCI. For another example, the starting position of the first time-domain resource may be the starting position of the first time-domain symbol among the time-domain resource available for transmitting the second-stage SCI.

It shall be noted that, in the embodiments of the present disclosure, the time-domain resource available for transmitting the second-stage SCI in the first slot may be used to transmit the second-stage SCI, or may not be used to transmit the second-stage SCI.

In some other implementations, the starting position of the first time-domain resource may be determined based on the ending position of the time-domain resource available for transmitting the second-stage SCI in the first slot. For another example, the starting position of the first time-domain resource may be determined based on the ending position of the time-domain resource available for transmitting the second-stage SCI in the first slot and an offset value. The offset value may be an integer greater than or equal to 0, and the offset value may be expressed as the number of time-domain symbols.

A specific manner of determining the time-domain resource available for transmitting the second-stage SCI is not limited in the embodiments of the present disclosure. In some implementations, the starting position of the first time-domain resource may be determined based on the starting position of the time-domain resource available for transmitting the second-stage SCI. For example, the starting position of the first time-domain resource may be the starting position of the time-domain resource available for transmitting the second-stage SCI. In other words, the first time-domain resource starts from a starting position corresponding to the time-domain resource available for transmitting the second-stage SCI. For another example, the starting position of the first time-domain resource may be determined based on the starting position of the time-domain resource available for transmitting the second-stage SCI in the first slot and an offset value. The offset value may be an integer greater than or equal to 0, and the offset value may be expressed as the number of time-domain symbols.

In some other implementations, the ending position of the first time-domain resource is determined based on the starting position of the time-domain resource available for transmitting the second-stage SCI in the first slot. For example, the ending position of the first time-domain resource may be determined based on the starting position of the time-domain resource available for transmitting the second-stage SCI in the first slot and an offset value.

In some other implementations, the ending position of the first time-domain resource may be determined based on the ending position of the time-domain resource available for transmitting the second-stage SCI in the first slot. For example, the ending position of the first time-domain resource may be determined based on the ending position of the time-domain resource available for transmitting the second-stage SCI in the first slot and an offset value. The offset value may be an integer greater than or equal to 0, and the offset value may be expressed as the number of time-domain symbols. Certainly, in the embodiments of the present disclosure, any position of the first time-domain resource is determined based on the time-domain resource available for transmitting the second-stage SCI in the first slot.

It shall be noted that, in the embodiments of the present disclosure, if the time-domain resource available for transmitting the second-stage SCI is used to transmit the CSI-RS, the first slot may not be used to transmit the second-stage SCI. Instead, if the time-domain resource available for transmitting the second-stage SCI is not used to transmit the CSI-RS, the first slot may be used to transmit the second-stage SCI. Certainly, the first slot may not be used to transmit the second-stage SCI.

Example 3: the first time-domain resource is determined based on a second time-domain symbol in the first slot.

In some implementations, the first time-domain resource being determined based on the second time-domain symbol in the first slot may include: that the time-domain position of the first time-domain resource may be determined based on a time-domain position of the second time-domain symbol in the first slot. The time-domain position of the first time-domain resource may include a starting time-domain position of the first time-domain resource, an ending time-domain position of the first time-domain resource, or any time-domain position of the first time-domain resource. The time-domain position of the second time-domain symbol may include a starting time-domain position of the second time-domain symbol, an ending time-domain position of the second time-domain symbol, or any time-domain position of the second time-domain symbol.

In some implementations, the starting position of the first time-domain resource is determined based on the second time-domain symbol in the first slot. For example, the starting position of the first time-domain resource may be determined based on the starting position of the second time-domain symbol in the first slot. For another example, the starting position of the first time-domain resource may be the starting position of the second time-domain symbol in the first slot. In other words, the first time-domain resource starts from a starting position corresponding to the second time-domain symbol.

With continued reference to FIG. 17A, the slot n+1 may be used as an example of the first slot. A second time-domain symbol available for sidelink communication in the slot n+1 is time-domain symbol 1. In the slot n+1, the first time-domain resource include time-domain symbol 1 to time-domain symbol 12. That is, the starting position of the first time-domain resource is a starting position of the time-domain symbol 1. In other words, the first time-domain resource starts from a starting position corresponding to the second time-domain symbol.

It shall be noted that, in the embodiments of the present disclosure, assuming that time-domain symbols in the first slot are indexed sequentially from 0, the second time-domain symbol may be a time-domain symbol with an index of 1 in the first slot. Assuming that the time-domain symbols in the first slot are sequentially indexed from 1, the second time-domain symbol may be a time-domain symbol with an index of 2 in the first slot.

Furthermore, a specific manner of determining the starting position of the first time-domain resource based on the second time-domain symbol in the first slot is not limited in the embodiments of the present disclosure. For example, the starting position of the first time-domain resource may be determined based on the ending position of the second time-domain symbol in the first slot. For another example, the starting position of the first time-domain resource may be determined based on a certain position of the second time-domain symbol in the first slot and an offset value.

It shall be noted that, in the embodiments of the present disclosure, the first time-domain resource being determined based on the second time-domain symbol in the first slot may include that the ending position of the first time-domain resource is determined based on the second time-domain symbol in the first slot. For example, the ending position of the first time-domain resource is determined based on the second time-domain symbol in the first slot and an offset value. The offset value may be an integer greater than or equal to 0, and the offset value may be expressed as the number of time-domain symbols. Certainly, in the embodiments of the present disclosure, any position of the first time-domain resource is determined based on the second time-domain symbol in the first slot, which is not limited in the embodiments of the present disclosure.

Example 4: the first time-domain resource is determined based on the second time-domain symbol available for sidelink transmission in the first slot.

The second time-domain symbol available for the sidelink transmission in the first slot may be the second time-domain symbol in the first slot. For example, assuming that the time-domain symbols in the first slot are indexed sequentially from 0 and the time-domain symbols available for the sidelink transmission in the first slot include multiple consecutive time-domain symbols where time-domain symbol 0 is a starting time-domain symbol, the second time-domain symbol available for the sidelink transmission in the first slot may be time-domain symbol 1 in the first slot.

For another example, assuming that the time-domain symbols in the first slot are indexed sequentially from 0, and the time-domain symbols available for the sidelink transmission in the first slot include multiple consecutive time-domain symbols where time-domain symbol 1 is the starting time-domain symbol, the second time-domain symbol available for the sidelink transmission in the first slot may be the time-domain symbol 2 in the first slot.

In some implementations, the first time-domain resource being determined based on the second time-domain symbol available for the sidelink transmission in the first slot may include: that the time-domain position of the first time-domain resource may be determined based on a time-domain position of the second time-domain symbol available for the sidelink transmission in the first slot. The time-domain position of the first time-domain resource may include the starting time-domain position of the first time-domain resource, the ending time-domain position of the first time-domain resource, or any time-domain position of the first time-domain resource. The time-domain position of the second time-domain symbol available for the sidelink transmission may include a starting time-domain position of the second time-domain symbol available for the sidelink transmission, an ending time-domain position of the second time-domain symbol available for the sidelink transmission, or any time-domain position of the second time-domain symbol available for the sidelink transmission.

In some implementations, the starting position of the first time-domain resource is determined based on the second time-domain symbol available for the sidelink transmission in the first slot. For example, the starting position of the first time-domain resource may be determined based on the starting position of the second time-domain symbol available for the sidelink transmission in the first slot. For another example, the starting position of the first time-domain resource may be the starting position of the second time-domain symbol available for the sidelink transmission in the first slot. In other words, the first time-domain resource starts from a starting position corresponding to the second time-domain symbol available for the sidelink transmission in the first slot.

With continued reference to FIG. 17A, the slot n+1 may be used as an example of the first slot. Time-domain symbols available for sidelink transmission in the slot n+1 include multiple consecutive time-domain symbols where the time-domain symbol 0 is the starting time-domain symbol. Accordingly, the second time-domain symbol available for the sidelink transmission in the slot n+1 is time-domain symbol 1. Therefore, the starting position of the first time-domain resource in the slot n+1 may be the time-domain symbol 1. In other words, the first time-domain resource starts from a starting position corresponding to the time-domain symbol 1 in the slot n+1.

It shall be noted that, in the embodiments of the present disclosure, assuming that time-domain symbols in the first slot are indexed from 0, the second time-domain symbol may be a time-domain symbol with an index of 1 in the first slot. Assuming that the time-domain symbols in the first slot are indexed from 1, the second time-domain symbol may be a time-domain symbol with an index of 2 in the first slot.

Furthermore, a specific method of determining the starting position of the first time-domain resource based on the second time-domain symbol available for the sidelink transmission in the first slot is not limited in the embodiments of the present disclosure. For example, the starting position of the first time-domain resource may be determined based on the ending position of the second time-domain symbol available for the sidelink transmission in the first slot. For another example, the starting position of the first time-domain resource may be determined based on a certain position of the second time-domain symbol available for the sidelink transmission in the first slot and an offset value. The offset value may be an integer greater than or equal to 0, and the offset value may be expressed as the number of time-domain symbols.

It shall be noted that, in the embodiments of the present disclosure, the first time-domain resource being determined based on the second time-domain symbol available for the sidelink transmission in the first slot may include that the ending position of the first time-domain resource may be determined based on the second time-domain symbol available for the sidelink transmission in the first slot. For example, the ending position of the first time-domain resource is determined based on the second time-domain symbol available for the sidelink transmission in the first slot and an offset value. The offset value may be an integer greater than or equal to 0, and the offset value may be expressed as the number of time-domain symbols. Certainly, in the embodiments of the present disclosure, any position of the first time-domain resource may be determined based on the second time-domain symbol available for the sidelink transmission in the first slot, which is not limited in the embodiments of the present disclosure.

Example 5: the first time-domain resource is determined based on a guard symbol in the first slot.

In some implementations, the ending position of the first time-domain resource is determined based on the guard symbol in the first slot. For example, the ending position of the first time-domain resource may be determined based on a starting position of the guard symbol in the first slot. For another example, the ending position of the first time-domain resource may be adjacent to the starting position of the guard symbol.

With continued reference to FIG. 17A, the slot n+1 may be used as an example of the first slot. The guard symbol in the slot n+1 is time-domain symbol 13. In the slot n+1, the ending position of the first time-domain resource is an ending position of time-domain symbol 12. That is, the ending position of the first time-domain resource is adjacent to the starting position of the guard symbol.

In some other implementations, the ending position of the first time-domain resource may be determined based on an ending position of a previous time-domain symbol of the guard symbol in the first slot. For example, the ending position of the first time-domain resource may be the ending position of the previous time-domain symbol of the guard symbol in the first slot.

With continued reference to FIG. 17A, the slot n+1 may be used as an example of the first slot. The guard symbol in the slot n+1 is time-domain symbol 13, and the previous time-domain symbol of the guard symbol is time-domain symbol 12. In the slot n+1, the ending position of the first time-domain resource is an ending position of the time-domain symbol 12. That is, the ending position of the first time-domain resource is the ending position of the previous time-domain symbol of the guard symbol.

It shall be noted that, in the embodiments of the present disclosure, the first time-domain resource being determined based on the guard symbol in the first slot may include: that the starting position of the first time-domain resource is determined based on the guard symbol in the first slot. For example, the starting position of the first time-domain resource is determined based on the guard symbol in the first slot and the offset value. The offset value may be an integer greater than or equal to 0, and the offset value may be expressed as the number of time-domain symbols. Certainly, in the embodiments of the present disclosure, any position of the first time-domain resource is determined based on the guard symbol in the first slot.

As described above, the first time unit may include multiple slots. Accordingly, the first slot may be a slot other than an initial slot in the first time unit. Certainly, in the embodiments of the present disclosure, the first slot may also be the initial slot in the first time unit.

If the first time unit includes multiple slots, examples of the first slot described above may be combined with each other. A description will be made below with reference to FIG. 17A to FIG. 17D by taking an example in which the first time unit includes two consecutive slots (i.e., slot n and slot n+1). It shall be noted that only possible exemplary combinations are listed below for ease of understanding, and combinations in the embodiments of the present disclosure are not limited thereto.

Referring to FIG. 17A, first time-domain symbols in the slot n and the slot n+1 are used as AGC, and last time-domain symbols in the slot n and the slot n+1 are used as GP. The slot n is used to transmit the PSCCH and the second-stage SCI. Mapping of the second-stage SCI starts from a time-domain symbol for a first PSSCH DMRS. The first PSSCH DMRS is located at the second time-domain symbol in the slot n, and the last time-domain symbol corresponding to the second-stage SCI is time-domain symbol 4. Time-domain symbols for transmitting the PSCCH in the slot n are time-domain symbol 1 to time-domain symbol 3. The resource available for transmitting the CSI-RS in the slot n+1 includes time-domain symbol 1 to time-domain symbol 12. The slot n+1 is not used to transmit the PSCCH and the second-stage SCI.

Referring to FIG. 17B, first time-domain symbols in the slot n and the slot n+1 are used as AGC, and last time-domain symbols in the slot n and the slot n+1 are used as GP. The slot n is used to transmit the PSCCH and the second-stage SCI. Mapping of the second-stage SCI starts from the time-domain symbol for the first PSSCH DMRS. The first PSSCH DMRS is located at the second time-domain symbol in the slot n, and the last time-domain symbol corresponding to the second-stage SCI is time-domain symbol 4. Time-domain symbols for transmitting the PSCCH in the slot n are time-domain symbol 1 to time-domain symbol 3. Time-domain symbols 1 to 3 in the slot n+1 are used to transmit the PSCCH, and the slot n+1 is not used for the second-stage SCI. Furthermore, time-domain symbol 4 to time-domain symbol 12 are the resource available for transmitting the CSI-RS.

Referring to FIG. 17C, the first time unit includes the slot n and the slot n+1. First time-domain symbols in the slot n and the slot n+1 are used as AGC, and last time-domain symbols in the slot n and the slot n+1 are used as GP. The slot n is used to transmit the PSCCH and the second-stage SCI. Mapping of the second-stage SCI starts from the time-domain symbol for the first PSSCH DMRS. The first PSSCH DMRS is located at the second time-domain symbol in the slot n, and the last time-domain symbol corresponding to the second-stage SCI is time-domain symbol 4. Time-domain symbols for transmitting the PSCCH in the slot n are time-domain symbol 1 to time-domain symbol 3. Time-domain symbols 1 to 3 in the slot n+1 are used to transmit the PSCCH, and the slot n+1 is not used for the second-stage SCI. Resources available for transmitting the CSI-RSs in the first time unit include time-domain symbol 12 in the slot n and time-domain symbols 4 to 12 in the slot n+1.

Referring to FIG. 17D, the first time unit includes the slot n and the slot n+1. First time-domain symbols in the slot n and the slot n+1 are used as AGC, and last time-domain symbols in the slot n and the slot n+1 are used as GP. Both the slot n and the slot n+1 are used to transmit the PSCCH and the second-stage SCI. Mapping of the second-stage SCI starts from the time-domain symbol for the first PSSCH DMRS in each of the two slots. The first PSSCH DMRS is located at the second time-domain symbol in each of the two slots, and the last time-domain symbol corresponding to the second-stage SCI is time-domain symbol 4. In the two slots, the time-domain symbols for transmitting the PSCCH are time-domain symbol 1 to time-domain symbol 3. In the first time unit, resources available for transmitting the CSI-RS include time-domain symbol 12 in the slot n and time-domain symbol 4 to time-domain symbol 12 in the slot n+1.

As described above, the last time-domain symbol in one slot is the guard symbol (also called GP symbol), which is typically used by the terminal device to perform transmit-to-receive conversion or transmit-to-receive conversion. In other words, the transmit-to-receive conversion or the transmit-to-receive conversion is required in a case where the terminal device performs transmission and reception in multiple slots adjacent to each other respectively. In the embodiments of the present disclosure, based on a multi-slot transmission scheme, the terminal for transmitting CSI-RS performs consecutive transmission in the multiple consecutive slots (i.e., the first time unit). The receiving end performs continuous reception in the multiple slots. The terminal device does not need to perform the transmit-to-receive conversion in the multiple consecutive slots. Therefore, in order to improve the transmission efficiency of CSI-RSs, a guard symbol in an earlier slot of adjacent slots among the multiple slots may be used to transmit the CSI-RS.

In some implementations, the guard symbol corresponds to the last time-domain symbol available for the sidelink transmission in an earlier slot. That is, if the earlier slot includes a resource for transmitting the PSFCH, the guard symbol located prior to the resource for transmitting the PSFCH is not used to transmit the CSI-RS.

For ease of understanding, the first time unit in another embodiment of the present disclosure will described below with reference to FIG. 17E. Referring to FIG. 17E, the first time unit includes slot n and slot n+1. First time-domain symbols in the slot n and the slot n+1 are used as AGC. Both the slot n and the slot n+1 are used to transmit the PSCCH and the second-stage SCI. Mapping of the second-stage SCI starts from the time-domain symbol for the first PSSCH DMRS in each of the two slots. The first PSSCH DMRS is located at the second time-domain symbol in each of the two slots, and the last time-domain symbol corresponding to the second-stage SCI is time-domain symbol 4. Time-domain symbols for transmitting the PSCCH in each of the two slots are time-domain symbol 1 to time-domain symbol 3.

In the first time unit, resources available for transmitting the CSI-RSs include time-domain symbols 12 and 13 in the slot n and time-domain symbol 4 to time-domain symbol 12 in the slot n+1. In other words, the time-domain symbol 13 originally used as the guard symbol in the slot n may be used to transmit the CSI-RS.

In some scenarios, the terminal for transmitting CSI-RS needs to transmit indication information of the CSI-RS resource (also called "first indication information") before transmitting the CSI-RS, so that the terminal for receiving CSI-RS may determine the CSI-RS to be received subsequently. Therefore, in some implementations, the method further includes the first terminal device for receiving or transmitting the first indication information. The first indication information is used for indicating the first CSI-RS resource.

It shall be noted that, if the first terminal device is a terminal for transmitting CSI-RS, the first terminal device may also be a terminal transmitting the first indication information. If the first terminal device is a terminal for receiving CSI-RS, the first terminal device may also be a terminal receiving the first indication information.

In some implementations, the resource for transmitting the first indication information may be located in the first time unit. For example, a slot where the resource for transmitting the first indication information is located may be the same as a slot where the resource available for transmitting the CSI-RS in the first time unit is located. For another example, the slot where the resource for transmitting the first indication information is located may be earlier than the slot where the resource available for transmitting the CSI-RS in the first time unit is located. Certainly, in the embodiments of the present disclosure, the first indication information may also be located in a time-domain resource before the first time unit. For example, the time unit where the first indication information is located is a time unit before the first time unit.

In some implementations, the first indication information is used for indicating one or more of: a time-domain position of the first CSI-RS resource in the first time unit; a number of CSI-RS resources included in the first time unit; a number of time-domain symbols contained in the first CSI-RS resource; and CSI-RS resource information corresponding to the first CSI-RS resource.

For example, the first indication information is used for indicating the time-domain position of the first CSI-RS resource in the first time unit. In some implementations, the first CSI-RS resource may be a first CSI-RS resource in the first time unit. In other words, the first CSI-RS resource may be an earliest CSI-RS resource in the first time unit. Certainly, in the embodiments of the present disclosure, the first CSI-RS resource may also be a latest CSI-RS resource in the first time unit.

In the embodiments of the present disclosure, the first indication information may directly indicate the time-domain position of the first CSI-RS resource. For example, the first indication information may include an index of the slot where the first CSI-RS resource is located, and/or an index of a starting time-domain symbol of the slot where the first CSI-RS resource is located. For another example, the first indication information may include the index of the slot where the first CSI-RS resource is located, and/or an index of an ending domain symbol of the slot where the first CSI-RS resource is located. Certainly, in the embodiments of the present disclosure, the first indication information may indirectly indicate the time-domain position of the first CSI-RS resource. For example, the time-domain position of the first CSI-RS resource may be indicated via an indication of a first time-domain position and an offset value. The offset value may be an offset value between the first time-domain position and the first CSI-RS resource. The offset value may be an integer greater than or equal to 0, and the offset value may be expressed as the number of time-domain symbols.

In some implementations, the first time-domain position may include one of: a starting position of a time-domain resource used to transmit the PSCCH in the first time unit; an ending position of the time-domain resource used to transmit the PSCCH in the first time unit; a starting position of a time-domain resource used to transmit the second-stage SCI in the first time unit; an ending position of the time-domain resource used to transmit the second-stage SCI in the first time unit; a starting position of a first time-domain symbol available for sidelink transmission in the first time unit; an ending position of the first time-domain symbol available for the sidelink transmission in the first time unit; a starting position of a first time-domain symbol in the first time unit; an ending position of the first time-domain symbol in the first time unit; a starting position of a first PSSCH DMRS symbol in the first time unit; and an ending position of the first PSSCH DMRS symbol in the first time unit.

A specific form of the time-domain position of the first CSI-RS resource is not limited in the embodiments of the present disclosure. For example, the time-domain position of the first CSI-RS resource may be a starting position of the first CSI-RS resource. For another example, the time-domain position of the first CSI-RS resource may be an ending position of the first CSI-RS resource.

For example, the first indication information is used for indicating the number of CSI-RS resources in the first time unit. In some implementations, the first indication information may directly indicate the number of CSI-RS resources in the first time unit. For example, the first indication information may directly indicate that the number of CSI-RS resources included in the first time unit is N, and N is a positive integer greater than or equal to 1. In some other implementations, the first indication information may indirectly indicate the number of CSI-RS resources in the first time unit. For example, the first indication information may include a total number of time-domain symbols for transmitting CSI-RSs in the first time unit and a number of time-domain symbols occupied by one CSI-RS resource. Accordingly, the receiving end may determine the number of CSI-RS resources included in the first time unit through dividing the total number of time-domain symbols for transmitting the CSI-RS in the first time unit by the number of time-domain symbols contained in the one CSI-RS resource.

For example, the first indication information is used for indicating the number of time-domain symbols contained in the first CSI-RS resource. In other words, the first indication information is used for indicating the number of time-domain symbols contained in the CSI-RS resource in the first time unit.

In some implementations, the first indication information may directly indicate the number of time-domain symbols contained in one CSI-RS resource. For example, the first indication information may directly indicate that the number of time-domain symbols contained in one CSI-RS resource is P. In some other implementations, the first indication information may indirectly indicate the number of time-domain symbols contained in one CSI-RS resource. For example, the first indication information may include the total number of time-domain symbols for transmitting the CSI-RS in the first time unit and the number of CSI-RS resources included in the first time unit. Accordingly, the receiving end may determine the number of time-domain symbols contained in one CSI-RS resource through dividing the total number of time-domain symbols for transmitting the CSI-RS in the first time unit by the number of CSI-RS resources included in the first time unit. For another example, the number of one CSI-RS resource in the first time unit may be associated with a spatial domain transmission filter and/or a spatial domain reception filter. For yet another example, the first indication information may indicate that the CSI-RS resource in the first time unit is used to determine the spatial domain transmission filter (or transmit beam) or the spatial domain reception filter (or receive beam). In a case where the first time unit is used to determine the spatial domain transmission filter, the number of time-domain symbols contained in one CSI-RS resource is 2. In a case where the first time unit is used to determine the spatial domain reception filter, the number of time-domain symbols contained in one CSI-RS resource is 1.

For example, the first indication information is used for indicating the CSI-RS resource information corresponding to the first CSI-RS resource, and the CSI-RS resource information may include index information of the CSI-RS resource.

In some implementations, the first indication information may directly indicate the first CSI-RS resource information. For example, the first indication information may directly indicate the index information of the first CSI-RS resource. In some other implementations, the first indication information may indirectly indicate resource information of the first CSI-RS resource. For example, the first indication information may carry a first offset value. Accordingly, the receiving end may determine an index of the first CSI-RS resource based on the first offset value and a reference index. The reference index may be pre-configured, configured by a network device, or pre-defined by a protocol.

In some scenarios, the first time unit may include multiple CSI-RS resources. Accordingly, the first indication information may be used for indicating pieces of CSI-RS resource information corresponding to the multiple CSI-RS resources.

In some implementations, the first indication information may directly indicate the pieces of CSI-RS resource information corresponding to the multiple CSI-RS resources. For example, in a case where the CSI-RS resource information includes the index information of the CSI-RS resource, the first indication information may directly carry a respective piece of index information of each CSI-RS resource among the multiple CSI-RS resources. In some other implementations, the first indication information may indirectly indicate the pieces of CSI-RS resource information corresponding to the multiple CSI-RS resources. For example, in the case where the CSI-RS resource information includes the index information of the CSI-RS resource, the first indication information may carry index information of a target CSI-RS resource among the multiple CSI-RS resources. Accordingly, based on the index information of the target CSI-RS resource, the receiving end may determine index information of other CSI-RS resource among the multiple CSI-RS resources.

The target CSI-RS resource is not limited in the embodiments of the present disclosure. For example, the target CSI-RS resource may be the first CSI-RS resource in the first time unit. For another example, the target CSI-RS resource may be the last CSI-RS resource in the first time unit. For yet another example, the target CSI-RS resource may be a certain CSI-RS resource in the first time unit.

In some implementations, the first indication information may be carried in one or more of: SCI, a media access control control element (MAC CE), and PC5-RRC signaling.

For example, the first indication information is carried in the SCI, and the SCI may be SCI transmitted in the first time unit. For example, the first indication information is carried in the first-stage SCI in the first time unit. For another example, the first indication information may be carried in the second-stage SCI in the first time unit.

For example, the first indication information is carried in the MAC CE, and the MAC CE may be a MAC CE transmitted in the first time unit.

Certainly, in the embodiments of the present disclosure, the first indication information may be determined based on one or more of: information pre-defined by a protocol, pre-configuration information, and configuration information from a network. For example, the first indication information may be the information pre-defined by the protocol. For another example, the first indication information may be the pre-configuration information. For yet another example, the first indication information may be the configuration information from the network.

It shall be noted that, in the embodiments of the present disclosure, various implementations of the first indication information may be used in combination with each other or may be used independently of each other. If multiple implementations of the first indication information are used in combination, the first indication information in the multiple implementations may be a piece of information or multiple pieces of different information, which is not limited in the embodiments of the present disclosure.

Furthermore, in the case where various implementations of the first indication information are used in combination, information indicated by the first indication information may be carried via the same signaling or different signaling, which is not limited in the embodiments of the present disclosure.

In some scenarios, after receiving the first indication information, the terminal device needs to process the first indication information or perform operations such as beam switching. Therefore, it is required to reserve a time interval between a time-domain resource of the first indication information and a resource for transmitting the CSI-RS (e.g., the first CSI-RS resource). In this way, the receiving end may perform corresponding operations.

In other words, in some implementations, the time interval between the time-domain resource of the first indication information and the first CSI-RS resource is greater than or equal to the first threshold. In other words, the time interval between the time-domain resource of the first indication information and the first CSI-RS resource is greater than or equal to duration corresponding to the first threshold.

In some implementations, the time interval may include a time interval between an ending position of the time-domain resource of the first indication information and a starting position of the first CSI-RS resource. Certainly, in the embodiments of the present disclosure, the time interval may include a time interval between a starting position of the time-domain resource of the first indication information and a starting position of the first CSI-RS resource, which is not limited in the embodiments of the present disclosure.

The form of the first threshold is not limited in the embodiments of the present disclosure. For example, the first threshold may be a period of time. For another example, the first threshold may be duration corresponding to Q time-domain resources. Q is a positive integer greater than or equal to 1, and the time-domain resources may be, for example, time-domain symbols.

In some implementations, the first threshold is determined based on one or more of: pre-configuration information; pre-definition information; configuration information from a network device; *timeDurationForQCL* parameter; *sl-timeDurationForQCL* parameter; a terminal capability of the terminal device for receiving CSI-RS; indication information transmitted by the terminal device receiving CSI-RS; and indication information transmitted by the terminal device for transmitting CSI-RS.

For example, the first threshold is determined based on the pre-configuration information. The pre-configuration information may include configuration information of sidelink BWP and/or configuration information of a resource pool. Accordingly, the first threshold may be determined based on the configuration information of the sidelink BWP and/or the configuration information of the resource pool. For example, the configuration information of the sidelink BWP and/or the configuration information of the resource pool may include the first indication information, and the first indication information is used for indicating the first threshold.

For example, the first threshold is determined based on the configuration information from the network device. The information configured by the network device may include the configuration information of the sidelink BWP and/or the configuration information of the resource pool. Accordingly, the first threshold may be determined based on the configuration information of the sidelink BWP and/or the configuration information of the resource pool. For example, the configuration information of the sidelink BWP and/or the configuration information of the resource pool may include the first indication information, and the first indication information is used for indicating the first threshold.

For example, the first threshold is determined based on the pre-definition information. The pre-definition information may be implemented through pre-storing a corresponding code, table or other information that is able to indicate the first threshold in the first terminal device, and a specific implementation is not limited in the present disclosure. For example, pre-definition may refer to definition in the protocol.

For example, the first threshold is determined based on the terminal capability of the terminal device for receiving CSI-RS. In other words, the first threshold is related to the terminal capability of the terminal device for receiving CSI-RS. For example, the higher the terminal capability of the terminal device for receiving CSI-RS, the less time is required for the terminal device for receiving CSI-RS to process the first indication information or perform operations such as the beam switching. Accordingly, the duration corresponding to the first threshold may be shorter. Instead, the lower the terminal capability of the terminal device for receiving CSI-RS, the more time is required for the terminal device for receiving CSI-RS to process the first indication information or perform operations such as the beam switching. Accordingly, the duration corresponding to the first threshold may be longer.

For example, the first threshold is determined based on the indication information transmitted by the terminal device for receiving CSI-RS. In some implementations, the terminal device for receiving CSI-RS may transmit indication information to the terminal device for transmitting CSI-RS, so as to indicate an expected second threshold. Accordingly, the terminal device for transmitting CSI-RS may determine the first threshold based on the expected second threshold.

In the embodiments of the present disclosure, the second threshold may be related to the terminal capability of the terminal device for receiving CSI-RS. For example, the higher the terminal capability of the terminal device for receiving CSI-RS, the less time is required for the terminal device for receiving CSI-RS to process the first indication information or perform operations such as the beam switching. Accordingly, duration corresponding to the second threshold may be shorter. Instead, the lower the terminal capability of the terminal device for receiving CSI-RS, the more time is required for the terminal device for receiving CSI-RS to process the first indication information or perform operations such as the beam switching. Accordingly, the duration corresponding to the second threshold may be longer.

For example, the first threshold is determined based on the indication information transmitted by the terminal device for transmitting CSI-RS. In some implementations, the first threshold may be carried by one or more of: SCI, a MAC CE, and PC5-RRC.

For example, the first threshold is carried in the SCI, and the SCI may be SCI transmitted in the first time unit. For example, the first threshold is carried in the first-stage SCI in the first time unit. For another example, the first threshold may be carried in the second-stage SCI in the first time unit.

For example, the first threshold is carried in a MAC CE, and the MAC CE may be a MAC CE transmitted in the first time unit.

It shall be noted that, in the embodiments of the present disclosure, in the case where the first threshold is determined based on the indication information transmitted by the terminal device for transmitting CSI-RS, indication information indicating the first threshold may be the same information as the first indication information described above. Certainly, in the embodiments of the present disclosure, the indication information indicating the first threshold may be different from the first indication information described above.

Furthermore, it shall be noted that the first threshold is determined based on the one or more pieces of information in the embodiments of the present disclosure. It shall be understood that the one or more pieces of information may directly indicate the first threshold. Alternatively, the first threshold may be determined (for example, calculated) by parameters carried by the one or more pieces of information.

For ease of understanding, a description will be made below by taking an example in which the first threshold is 7 time-domain symbols. With continued reference to FIG. 17A to FIG. 17E, the first indication information and positions of the resources available for transmitting the CSI-RSs in the first time unit in the embodiments of the present disclosure will be described.

With continued reference to FIG. 17A, the first time unit includes the slot n and the slot n+1. The first time-domain symbols in the slot n and the slot n+1 are used as AGC, and the last time-domain symbols in the slot n and the slot n+1 are used as GP. The slot n is used to transmit the PSCCH and the second-stage SCI. Mapping of the second-stage SCI starts from a time-domain symbol for a first PSSCH DMRS. The first PSSCH DMRS is located at the second time-domain symbol in the slot n, and the last time-domain symbol corresponding to the second-stage SCI is time-domain symbol 4. Time-domain symbols for transmitting the PSCCH in the slot n are time-domain symbol 1 to time-domain symbol 3. The slot n+1 is not used to transmit the PSCCH and the second-stage SCI.

The first indication information is carried in the second-stage SCI in the slot n, the last time-domain symbol of the second-stage SCI is the time-domain symbol 4 and the first threshold is 7 time-domain symbols. Accordingly, the resource(s) available for transmitting CSI-RS(s) in the first time unit are time-domain symbol 1 to time-domain symbol 12 in the slot n+1. An interval between the time-domain symbol 1 in the slot n+1 and the last time-domain symbol of the second-stage SCI is 10 time-domain symbols, which satisfy the requirement of the first threshold.

With continued reference to FIG. 17B, the first time unit includes the slot n and the slot n+1. The first time-domain symbols in the slot n and the slot n+1 are used as AGC, and the last time-domain symbols in the slot n and the slot n+1 are used as GP. The slot n is used to transmit the PSCCH and the second-stage SCI. Mapping of the second-stage SCI starts from the time-domain symbol for the first PSSCH DMRS. The first PSSCH DMRS is located at the second time-domain symbol in the slot n, and the last time-domain symbol corresponding to the second-stage SCI is time-domain symbol 4. Time-domain symbols for the PSCCH transmission in the slot n are time-domain symbol 1 to time-domain symbol 4. The slot n+1 is used to transmit the PSCCH, and the time-domain symbols for transmitting PSCCH are time-domain symbol 1 to time-domain symbol 3. The slot n+1 is not used to transmit the second-stage SCI.

The first indication information is carried in the first-stage SCI in the slot n, the last time-domain symbol for transmitting the first-stage SCI may be the last time-domain symbol for transmitting the PSCCH (i.e., time-domain symbol 3) and the first threshold is 7 time-domain symbols. Accordingly, the resources available for transmitting the CSI-RS in the first time unit are time-domain symbol 4 to time-domain symbol 12 in the slot n+1. An interval between the time-domain symbol 4 in the slot n+1 and the last time-domain symbol for transmitting the PSCCH is 14 time-domain symbols, which satisfy the requirement of the first threshold.

With continued reference to FIG. 17C, the first time unit includes the slot n and the slot n+1. The first time-domain symbols in the slot n and the slot n+1 are used as AGC, and the last time-domain symbols in the slot n and the slot n+1 are used as GP. The slot n is used to transmit the PSCCH and the second-stage SCI. Mapping of the second-stage SCI starts from the time-domain symbol for the first PSSCH DMRS. The first PSSCH DMRS is located at the second time-domain symbol in the slot n, and the last time-domain symbol corresponding to the second-stage SCI is time-domain symbol 4. Time-domain symbols used for transmitting the PSCCH in the slot n are time-domain symbol 1 to time-domain symbol 4. The slot n+1 is used to transmit the PSCCH, and the time-domain symbols for transmitting PSCCH are time-domain symbol 1 to time-domain symbol 3. The slot n+1 is not used to transmit the second-stage SCI.

The first indication information is carried in the second-stage SCI in the slot n, the last time-domain symbol of the second-stage SCI is time-domain symbol 4 and the first threshold is 7 time-domain symbols. Accordingly, the resources available for transmitting CSI-RSs in the first time unit include time-domain symbol 12 in the slot n and time-domain symbol 4 to time-domain symbol 12 in the slot n+1. That is, the resource(s) available for transmitting the CSI-RS(s) in the slot n+1 range from a next time-domain symbol of the resources for transmitting PSCCH to a previous time-domain symbol of the GP. An interval between the time-domain symbol 12 in the slot n and the last time-domain symbol of the second-stage SCI is 7 time-domain symbols, which satisfy the requirement of the first threshold.

With continued reference to FIG. 17D, the first time unit includes the slot n and the slot n+1. The first time-domain symbols in the slot n and the slot n+1 are used as AGC, and the last time-domain symbols in the slot n and the slot n+1 are used as GP. Both the slot n and the slot n+1 are used to transmit the PSCCH and the second-stage SCI. Mapping of the second-stage SCI starts from the time-domain symbol for the first PSSCH DMRS in each of the two slots. The first PSSCH DMRS is located at the second time-domain symbol in each of the two slots, and the last time-domain symbol corresponding to the second-stage SCI is time-domain symbol 4. Time-domain symbols for transmitting the PSCCH in the slot n and the slot n+1 are time-domain symbol 1 to time-domain symbol 3.

The first indication information is carried in the second-stage SCI in the slot n, the last time-domain symbol of the second-stage SCI is time-domain symbol 4 and the first threshold is 7 time-domain symbols. Accordingly, the resources available for transmitting CSI-RSs in the first time unit include time-domain symbol 12 in the slot n and time-domain symbols 5 to 12 in the slot n+1. That is, the resource(s) available for transmitting CSI-RS(s) in the slot n+1 range from the next time-domain symbol of the resources for transmitting the second-stage SCI to the previous time-domain symbol of the GP. The interval between the time-domain symbol 12 in the slot n and the last time-domain symbol of the second-stage SCI is 7 time-domain symbols, which satisfy the requirement of the first threshold.

With continued reference to FIG. 17E, the first time unit includes the slot n and the slot n+1. Both the slot n and slot n+1 are used to transmit the PSCCH and the second-stage SCI. Mapping of the second-stage SCI starts from the time-domain symbol for the first PSSCH DMRS in each of the two slots. The first PSSCH DMRS is located at the second time-domain symbol in each of the two slots, and the last time-domain symbol corresponding to the second-stage SCI is time-domain symbol 4. Time-domain symbols for transmitting the PSCCH in the slot n and the slot n+1 are time-domain symbol 1 to time-domain symbol 3. The first time-domain symbols in the slot n and the slot n+1 are used as AGC. The last time-domain symbol in the slot n+1 is used as GP.

The first indication information is carried in the second-stage SCI in the slot n, the last time-domain symbol of the second-stage SCI is time-domain symbol 4 and the first threshold is 7 time-domain symbols. Accordingly, the resources available for transmitting CSI-RSs in the first time unit include time-domain symbol 12 and time-domain symbol 13 in the slot n and time-domain symbol 5 to time-domain symbol 12 in the slot n+1. In other words, the time-domain symbol that can be used as the GP in the slot n is used as the resource available for transmitting the CSI-RS. Accordingly, the resource(s) available for transmitting CSI-RS(s) in the slot n+1 range from the next time-domain symbol of the resources for transmitting the second-stage SCI to the previous time-domain symbol of the GP. The interval between the time-domain symbol 12 in the slot n and the last time-domain symbol for the second-stage SCI is 7 time-domain symbols, which satisfy the requirement of the first threshold.

In some scenarios, the first CSI-RS resource may be a transmission resource reserved by the terminal device for transmitting CSI-RS. In other words, the terminal device for transmitting CSI-RS may reserve the resources(s) available for transmitting CSI-RS in the first time unit by means of resource reservation. Alternatively, the terminal device for transmitting CSI-RS may reserve the first time unit including the resource(s) for transmitting CSI-RS(s) by means of resource reservation. As described above, the first time unit may include multiple consecutive slots. Certainly, in the embodiments of the present disclosure, the first time unit may also include one slot. A description will be made by taking an example in which the first time unit includes one slot in conjunction with Embodiment 2.

Embodiment 2

In the embodiment of the present disclosure, the first time unit may include one slot (referred to as "second slot" hereinafter). Accordingly, the first CSI-RS resource may be located in the second slot. The first CSI-RS resource may refer to the first CSI-RS resource described in Embodiment 1. Furthermore, a structure of the second slot may refer to the first slot described above, which will not be repeated below for brevity.

It shall be noted that the second slot may include one or more CSI-RS resources in the embodiment of the present disclosure. In a case where the second slot includes multiple CSI-RS resources, the first CSI-RS resource may be a certain CSI-RS resource in the second slot. For example, the first CSI-RS resource may be a first CSI-RS resource in the second slot. For example, the first CSI-RS resource may be a last CSI-RS resource in the second slot, which is not limited in the embodiment of the present disclosure. Certainly, in a case where the second slot includes only one CSI-RS resource, the CSI-RS resource is the first CSI-RS resource.

In some scenarios, the terminal device for transmitting CSI-RS may transmit first indication information to reserve the first CSI-RS resource. In some implementations, the first indication information may be transmitted in a third slot with an earlier time-domain position than the second slot. Certainly, in the embodiment of the present disclosure, the first indication information may also be located in the second slot.

Generally, after receiving the first indication information, the terminal device for receiving CSI-RS needs to process the first indication information or perform operations such as beam switching. Therefore, it is required to reserve a time interval between the time-domain resource of the first indication information and the first CSI-RS resource, so that the terminal device for receiving CSI-RS may perform corresponding operations. In some implementations, in a case where the first indication information is transmitted in the third slot, a time interval between the second slot and the third slot is greater than or equal to the first threshold. In other words, the time interval between the second slot and the third slot is greater than or equal to the duration corresponding to the first threshold.

In some implementations, the time interval between the second slot and the third slot may be determined based on a time interval between a starting time-domain position of the second slot and a first time point. For example, the time interval between the second slot and the third slot may be equal to the time interval between the starting time-domain position of the second slot and the first time point. For another example, the time interval between the second slot and the third slot may be calculated based on the time interval between the starting time-domain position of the second slot and the first time point.

Certainly, in the embodiment of the present disclosure, the time interval between the second slot and the third slot may be determined based on a time interval between the first CSI-RS resource in the second slot and the first time point. In some implementations, the time interval between the first CSI-RS resource and the first time point may be a time interval between the starting position of the first CSI-RS resource and the first time point. In some other implementations, the time interval between the first CSI-RS resource and the first time point may be a time interval between the ending position of the first CSI-RS resource and the first time point. Certainly, in the embodiment of the present disclosure, the time interval between the first CSI-RS resource and the first time point may be a time interval between any position of the first CSI-RS resource and the first time point.

In some implementations, the first time point includes one of: a starting time point of the third slot; an ending time point of the third slot; a starting time point of the time-domain resource of the first indication information transmitted in the third slot; an ending time point of the time-domain resource of the first indication information transmitted in the third slot; a starting time point of a next time-domain symbol of the time-domain resource of the first indication information transmitted in the third slot; a starting time point of a time-domain resource for a PSCCH in the third slot; an ending time point of the time-domain resource for the PSCCH in the third slot; a starting time point of the second-stage SCI in the third slot; and an ending time point of the second-stage SCI in the third slot.

For example, the first time point includes the starting time point of the third slot. In some implementations, the starting time point of the third slot may be understood as a starting position of the third slot, or a starting position of the first time-domain symbol in the third slot.

For example, the first time point includes the ending time point of the third slot. In some implementations, the ending time point of the third slot may be understood as an ending position of the third slot, or an ending position of the last time-domain symbol in the third slot.

For example, the first time point includes the starting time point of the time-domain resource of the first indication information transmitted in the third slot. In some implementations, the starting time point of the time-domain resource of the transmitted first indication information may be understood as a starting position of the time-domain resource of the transmitted first indication information or a starting position of the first time-domain symbol of the time-domain resource of the transmitted first indication information.

For example, the first time point includes the ending time of the time-domain resource of the first indication information transmitted in the third slot. In some implementations, the ending time of the time-domain resource of the transmitted first indication information may be understood as an ending position of the time-domain resource of the transmitted first indication information or an ending position of the last time-domain symbol among the time-domain resource of the transmitted first indication information.

For example, the first time point includes the starting time point of the time-domain resource of PSCCH in the third slot. In some implementations, the starting time point of the time-domain resource of PSCCH may be understood as a starting position of the time-domain resource of PSCCH or a starting position of the first time-domain symbol among the time-domain resource of the PSCCH.

For example, the first time point includes the ending time of the time-domain resource of the PSCCH in the third slot. In some implementations, the ending time of the time-domain resource of the PSCCH may be understood as an ending position of the time-domain resource of the PSCCH or an ending position of the last time-domain symbol among the time-domain resource of the PSCCH.

For example, the first time point includes the starting time point of the second-stage SCI in the third slot. In some implementations, the starting time point of the time-domain resource of the second-stage SCI may be understood as a starting position of the time-domain resource of the second-stage SCI or a starting position of the first time-domain symbol among the time-domain resource of the second-stage SCI.

For example, the first time point includes the ending time point of the time-domain resource of the second-stage SCI in the third slot. In some implementations, the ending time point of the time-domain resource of the second-stage SCI may be understood as an ending position of the time-domain resource of the second-stage SCI or an ending position of the last time-domain symbol of the time-domain resource of the second-stage SCI.

It shall be noted that the meaning of the first threshold in the embodiments of the present disclosure is described above. For the implementations of the first threshold and/or the configuration manners of the first threshold, reference is made to the first threshold described in Embodiment1, which will not be repeated here for brevity.

The transmission mode of the first indication information is described above, and the meaning of the first indication information in the embodiments of the present disclosure will be described below.

In some implementations, the first indication information is used for indicating one or more of: a time-domain position of the first CSI-RS resource in the second slot; a number of CSI-RS resources included in the second slot; a number of time-domain symbols contained in the first CSI-RS resource; and CSI-RS resource information corresponding to the first CSI-RS resource.

For example, the first indication information is used for indicating the time-domain position of the first CSI-RS resource in the second slot, and the first CSI-RS resource may be the first CSI-RS resource in the second slot. In other words, the first CSI-RS resource may be the earliest CSI-RS resource in the second slot. Certainly, in the embodiments of the present disclosure, the first CSI-RS resource may also be the latest CSI-RS resource in the second slot.

In some implementations, the first indication information may directly indicate the time-domain position of the first CSI-RS resource. For example, the first indication information may include an index of the second slot and an index of a starting time-domain symbol of the first CSI-RS resource. For another example, the first indication information may include the index of the second slot and an index of an ending time-domain symbol of the first CSI-RS resource. Certainly, in the embodiments of the present disclosure, the first indication information may indirectly indicate the time-domain position of the first CSI-RS resource. For example, the first indication information may indicate the time-domain position of the first CSI-RS resource via the indication of the first time-domain position and an offset value. The offset value may be an offset value between the first time-domain position and the first CSI-RS resource. The offset value may be an integer greater than or equal to 0, and the offset value may be expressed as the number of time-domain symbols.

In some implementations, the first time-domain position may include one of: a starting position of the time-domain resource for transmitting the PSCCH in the second slot or the third slot; an ending position of the time-domain resource for transmitting the PSCCH in the second slot or the third slot; a starting position of the time-domain resource for transmitting the second-stage SCI in the second slot or the third slot; an ending position of the time-domain resource for transmitting the second-stage SCI in the second slot or the third slot, a starting position of the first time-domain symbol available for sidelink transmission in the second slot or the third slot; an ending position of the first time-domain symbol available for sidelink transmission in the second slot or the third slot; a starting position of the first time-domain symbol in the second slot or the third slot; an ending position of the first time-domain symbol in the second slot or the third slot; a starting position of the first PSSCH DMRS symbol in the second slot or the third slot; and an ending position of the first PSSCH DMRS symbol in the second slot or the third slot.

A specific form of the time-domain position of the first CSI-RS resource is not limited in the embodiments of the present disclosure. In some implementations, the time-domain position of the first CSI-RS resource may be the starting position of the first CSI-RS resource. For example, the starting position of the first CSI-RS resource may be determined based on a starting position of a slot where the first CSI-RS resource is located and/or a starting position of a starting time-domain symbol in the slot where the first CSI-RS resource is located. In some other implementations, the time-domain position of the first CSI-RS resource may be an ending position of the first CSI-RS resource. For example, the ending position of the first CSI-RS resource may be determined based on an ending position of the slot where the first CSI-RS resource is located and/or an ending position of the last time-domain symbol in the slot where the first CSI-RS resource is located.

For example, the first indication information is used for indicating the number of CSI-RS resources included in the second slot. In some implementations, the first indication information may directly indicate the number of CSI-RS resources in the second slot. For example, the first indication information may directly indicate that the number of CSI-RS resources included in the second slot is N, and N is a positive integer greater than or equal to 1. In some other implementations, the first indication information may indirectly indicate the number of CSI-RS resources in the second slot. For example, the first indication information may include a total number of time-domain symbols for transmitting the CSI-RSs in the second slot and a number of time-domain symbols occupied by one CSI-RS resource. Accordingly, the terminal for receiving CSI-RS may determine the number of CSI-RS resources included in the second slot through dividing the total number of time-domain symbols for transmitting the CSI-RSs in the second slot by the number of time-domain symbols contained in one CSI-RS resource. For another example, the number of one CSI-RS resource in the second slot may be associated with a spatial domain transmission filter and/or a spatial domain reception filter. For another example, the first indication information may indicate that the CSI-RS resource in the second slot is used to determine the spatial domain transmission filter (or transmit beam) or the spatial domain reception filter (or receive beam). If the CSI-RS resource in the second slot are used to determine the spatial domain transmission filter, the number of time-domain symbols included in one CSI-RS resource in the second slot is 2. If the CSI-RS resource in the second slot is used to determine the spatial domain reception filter, the number of time-domain symbols contained in one CSI-RS resource in the second slot is 1.

For example, the first indication information is used for indicating the number of time-domain symbols contained in the first CSI-RS resource. In other words, the first indication information is used for indicating the number of time-domain symbols contained in one CSI-RS resource in the second slot.

In some implementations, the first indication information may directly indicate the number of time-domain symbols contained in one CSI-RS resource. For example, the first indication information may directly indicate that the number of time-domain symbols included in one CSI-RS resource is P. In some other implementations, the first indication information may indirectly indicate the number of time-domain symbols contained in one CSI-RS resource. For example, the first indication information may include the total number of time-domain symbols for transmitting CSI-RS(s) in the second slot and the number of CSI-RS resources included in the second slot. Accordingly, the terminal for receiving CSI-RS may determine the number of time-domain symbols contained in one CSI-RS resource through dividing the total number of time-domain symbols for transmitting CSI-RS in the second slot by the number of CSI-RS resources included in the second slot.

For example, the first indication information is used for indicating the CSI-RS resource information corresponding to the first CSI-RS resource, and the CSI-RS resource information may include index information of the CSI-RS resource.

In some implementations, the first indication information may directly indicate the first CSI-RS resource information. For example, the first CSI-RS resource information includes the index information of the first CSI-RS resource, and the first indication information may directly indicate the index information of the first CSI-RS resource. In some other implementations, the first indication information may indirectly indicate the resource information of the first CSI-RS resource. For example, the first CSI-RS resource information includes the index information of the first CSI-RS resource, and the first indication information may carry a first offset value. Accordingly, the terminal for receiving CSI-RS may determine the index of the first CSI-RS resource based on the first offset value and a reference index. The reference index may be pre-configured, configured by a network device, or pre-defined by a protocol.

In some scenarios, the second slot may include multiple CSI-RS resources. Accordingly, the first indication information may be used for indicating pieces of CSI-RS resource information corresponding to the multiple CSI-RS resources.

In some implementations, the first indication information may directly indicate the pieces of CSI-RS resource information corresponding to the multiple CSI-RS resources. For example, the first indication information may directly indicate a respective piece of index information of each CSI-RS resource among the multiple CSI-RS resources. In some other implementations, the first indication information may indirectly indicate the pieces of CSI-RS resource information corresponding to the multiple CSI-RS resources. For example, the first indication information may carry index information of a target CSI-RS resource among the multiple CSI-RS resources. Accordingly, the terminal for receiving CSI-RS may determine index information of other CSI-RS resources among the multiple CSI-RS resources based on the index information of the target CSI-RS resource.

The target CSI-RS resource is not limited in the embodiments of the present disclosure. For example, the target CSI-RS resource may be the first CSI-RS resource in the second slot. For another example, the target CSI-RS resource may be the last CSI-RS resource in the second slot. For another example, the target CSI-RS resource may be a certain CSI-RS resource in the second slot.

In some implementations, the first indication information may be carried in one or more of: SCI, a MAC CE, and PC5-RRC signaling.

For example, the first indication information is carried in the SCI, and the SCI may be SCI transmitted in the third slot. For example, the first indication information is carried in the first-stage SCI in the third slot. For another example, the first indication information may be carried in the second-stage SCI in the third slot.

For example, the first indication information is carried in the MAC CE, and the MAC CE may be a MAC CE transmitted in the third slot.

Certainly, in the embodiments of the present disclosure, the first indication information may be determined based on one or more of: information pre-defined by a protocol, pre-configuration information, and configuration information from a network. For example, the first indication information may be the information pre-defined by the protocol. For another example, the first indication information may be the pre-configuration information. For yet another example, the first indication information may be the configuration information from the network.

It shall be noted that in the embodiments of the present disclosure, various implementations of the first indication information may be used in combination with each other or may be used independently of each other. If multiple implementations of the first indication information are used in combination, the first indication information in the multiple implementations may be one piece of information or multiple pieces of different information, which is not limited in the embodiments of the present disclosure.

Furthermore, if multiple implementations of the first indication information are used in combination, the information indicated by the first indication information may be carried via the same signaling or different signaling, which is not limited in the embodiment of the present disclosure.

The resource pre-emption mechanism is supported in known communication protocols. In other words, in a case where the terminal device transmits a PSCCH/PSSCH in the first slot, SCI carried by the PSCCH may typically reserve 1 or 2 transmission resources, and the transmission resource(s) are usually used for a PSSCH repetition. However, in a case where the transmission resource reserved via the SCI conflicts with a transmission resource reserved by other terminal, and a priority value of the terminal device is higher than a priority value of the other terminal (that is, the priority of the terminal device is lower than the priority of the other terminal), the transmission resource reserved by the terminal device are pre-empted. In this case, the terminal device needs to reselect a resource to replace the pre-empted resource.

Based on the resource pre-emption mechanism, assuming that a transmission resource in the second slot reserved by the terminal device for transmitting CSI-RS are used to transmit the CSI-RS, the transmission resource reserved by the terminal device for transmitting CSI-RS may be pre-empted by other terminal. In the case, the terminal device for transmitting CSI-RS needs to reselect a resource. However, a time-domain position of a transmission resource to be newly selected is unknown to the terminal device for receiving CSI-RS. Therefore, the terminal device for receiving CSI-RS may fail to receive the CSI-RS, which will cause a failure of the CSI-RS transmission. As a result, beam training or beam selection cannot be performed based on the CSI-RS.

Therefore, in order to solve the problem, the embodiments of the present disclosure further provide a solution for sidelink communication. In an implementation, a sidelink resource pre-emption enable parameter (expressed as "sl-PreemptionEnable") is set to the highest priority. In other words, a priority value of sl-PreemptionEnable is set to the minimum value.

For example, a value of sl-PreemptionEnable may be set to a value corresponding to the highest priority. In other words, sl-PreemptionEnable may be set to the minimum value of the priority. In the case, priorities of other terminal devices will not be higher than the priority corresponding to sl-PreemptionEnable. That is, the other terminal devices fail to pre-empt the first CSI-RS resource.

In another implementation, the sidelink priority of the first CSI-RS resource is the highest priority. In other words, a value of a sidelink priority level of the first CSI-RS resource is the minimum value. In the case, priorities of other terminal devices will not be higher than the priority corresponding to the first CSI-RS resource. That is, the other terminal devices fail to pre-empt the first CSI-RS resource.

In another implementation, a sidelink priority of sidelink transmission including the first CSI-RS resource is the highest priority. In other words, a value of a sidelink priority level of the sidelink transmission including the first CSI-RS resource is the minimum value. In this case, priorities of the other terminal device will not be higher than the priority corresponding to the first CSI-RS resource. That is, the other terminal devices fail to pre-empt the first CSI-RS resource.

The method embodiments of the present disclosure are described in detail above with reference to FIG. 1 to FIG. 17, and apparatus embodiments of the present disclosure will be described in detail below with reference to FIG. 18 and FIG. 19. It shall be understood that the description of the method embodiments corresponds to the description of the apparatus embodiments. Therefore, parts that are not described in detail may refer to the above method embodiments.

FIG. 18 is a schematic diagram of a terminal device according to embodiments of the present disclosure. The terminal device 1800 shown in FIG. 18 may be the first terminal device described above. The terminal device 1800 may include a processing unit 1810.

The processing unit 1810 is configured to determine a first CSI-RS resource in a first time unit. The first time unit satisfies one of: the first time unit including multiple consecutive slots; and the first time unit including one slot, the first CSI-RS resource being a transmission resource reserved by a terminal device for transmitting CSI-RS.

In one possible implementation, the first time unit includes a first slot available for transmitting a CSI-RS. The first slot includes the first CSI-RS resource, and the first slot satisfies one or more of: the first slot being only used to transmit the CSI-RS; the first slot being not used to transmit a physical sidelink control channel (PSCCH); the first slot being not used to transmit the second-stage sidelink control information (SCI); and the first slot being not used to transmit a physical sidelink shared channel (PSSCH).

In one possible implementation, the first time unit includes a first slot available for transmitting the CSI-RS. The first slot includes the first CSI-RS resource, and the first time-domain resource available for transmitting the CSI-RS in the first slot satisfies one or more of: a starting position of the first time-domain resource being determined based on the time-domain resource available for transmitting the PSCCH in the first slot; the starting position of the first time-domain resource being determined based on the time-domain resource available for transmitting second-stage SCI in the first slot; the starting position of the first time-domain resource being determined based on the second time-domain symbol available for sidelink transmission in the first slot; the starting position of the first time-domain resource being determined based on a second time-domain symbol in the first slot; and an ending position of the first time-domain resource being determined based on a guard symbol in the first slot.

In one possible implementation, if the starting position of the first time-domain resource is determined based on the time-domain resource available for transmitting the PSCCH in the first slot, the first time-domain resource starts from the starting position corresponding to the time-domain resource available for transmitting the PSCCH; or the starting position of the first time-domain resource is determined according to a first time-domain symbol after the time-domain resource available for transmitting PSCCH.

In one possible implementation, if the starting position of the first time-domain resource is determined based on the time-domain resource available for transmitting the second-stage SCI in the first slot, the starting position of the first time-domain resource is determined according to a first time-domain symbol after the time-domain resource available for transmitting the second-stage SCI.

In a possible implementation, the first time unit includes the multiple slots, and the first slot is a slot other than an initial slot among the multiple slots; or, the first time unit is the first slot.

In a possible implementation manner, the first time unit includes the multiple slots, and a guard symbol in an earlier slot of adjacent slots among the multiple slots is used to transmit a CSI-RS.

In a possible implementation, the terminal device further includes a communication unit, configured to receive or transmit first indication information. The first indication information is used to indicate the first CSI-RS resource.

In a possible implementation, the first indication information is used to indicate one or more of: a time-domain position of the first CSI-RS resource in the first time unit; a number of CSI-RS resources included in the first time unit; a number of time-domain symbols included in the first CSI-RS resource; and CSI-RS resource information corresponding to the first CSI-RS resource.

In a possible implementation manner, the first indication information is carried in one or more of: SCI, a MAC CE and PC5-RRC signaling.

In one possible implementation, the first time unit includes the multiple slots, and the first indication information is transmitted in the first time unit; or, the first time unit includes one slot, the first time unit is the second slot, and the first indication information is transmitted in a third slot with an earlier time-domain position than the second slot.

In a possible implementation manner, a time interval between a time-domain resource of the first indication information and the first CSI-RS resource is greater than or equal to a first threshold.

In a possible implementation manner, if the first indication information is transmitted in the third slot, a time interval between the second slot and the third slot is greater than or equal to a first threshold.

In one possible implementation, the time interval between the second slot and the third slot is determined based on a time interval between a starting time-domain position of the second slot and a first time point, and the first time point includes one of: the starting time point of the third slot; an ending time point of the third slot; a starting time point of a time-domain resource of the first indication information transmitted in the third slot; an ending time point of the time-domain resource of the first indication information transmitted in the third slot; a starting time point of a time-domain resource of the PSCCH in the third slot; an ending time of a time-domain resource of the PSCCH in the third slot; a starting time point of the second-stage SCI in the third slot; and an ending time point of the second-stage SCI in the third slot.

In one possible implementation, the first threshold is determined based on one or more of: pre-configuration information; pre-definition information; configuration information from a network device; timeDuration-ForQCL parameter; sl-timeDurationForQCL parameter; a terminal capability of the terminal device for receiving CSI-RS; and indication information transmitted by the terminal device for receiving CSI-RS.

In a possible implementation manner, the first threshold is carried in one or more of: SCI, a MAC CE, and PC5-RRC.

In a possible implementation manner, a sidelink resource pre-emption enable parameter corresponding to the first CSI-RS resource is of a highest priority; and/or a sidelink priority of the first CSI-RS resource is the highest priority.

In a possible implementation, the multiple consecutive slots include one or more of: multiple consecutive physical slots; multiple consecutive slots available for sidelink transmission; and multiple consecutive slots in a resource pool.

In an optional embodiment, the processing unit 1810 may be a processor 1910. The terminal device 1800 may further include a transceiver 1930 and a memory 1920, as specifically shown in FIG. 19.

FIG. 19 is a schematic diagram illustrating a structure of a communication apparatus according to the embodiments of the present disclosure. The dashed lines in FIG. 19 indicate that a unit or module is optional. An apparatus 1900 may be used to implement the method described in the above method embodiments. The apparatus 1900 may be a chip, a terminal device or a network device.

The apparatus 1900 may include one or more processors 1910. The processor 1910 may support the apparatus 1900 to implement the method described in the above method embodiments. The processor 1910 may be a general-purpose processor or a dedicated-purpose processor. For example, the processor may be a central processing unit (CPU). Alternatively, the processor may be other general-purpose processor, a digital signal processor (DSP), an application specific integrated circuit (ASIC), a field programmable gate array (FPGA) or other programmable logic device, a discrete gate or transistor logic device, a discrete hardware component, etc. The general-purpose processor may be a microprocessor. Alternatively, the processor may be any conventional processor or the like.

The apparatus 1900 may further include one or more memories 1920. The memory 1920 stores a program thereon, which may be executed by the processor 1910, so as to cause the processor 1910 to perform the method described in the above method embodiments. The memory 1920 may be independent of the processor 1910 or may be integrated into the processor 1910.

The apparatus 1900 may further include a transceiver 1930. The processor 1910 may communicate with other devices or chips through the transceiver 1930. For example, the processor 1910 may transmit and receive data from other devices or chips through the transceiver 1930.

The embodiments of the present disclosure further provide a computer-readable storage medium for storing a program. The computer-readable storage medium may be applied to the terminal device or the network device provided in the embodiments of the present disclosure. The program causes a computer to perform the method performed by the terminal device or the network device in various embodiments of the present disclosure.

The embodiments of the present disclosure further provide a computer program product. The computer program product comprises a program. The computer program product may be applied to the terminal device or the network device provided in the embodiments of the present disclosure. The program causes a computer to perform the method performed by the terminal device or the network device in various embodiments of the present disclosure.

The embodiments of the present disclosure further provide a computer program. The computer program may be applied to the terminal device or the network device provided in the embodiments of the present disclosure. The computer program causes a computer to perform the method performed by the terminal device or the network device in various embodiments of the present disclosure.

It shall be understood that the terms "system" and "network" in the present disclosure may be used interchangeably. Furthermore, the terms used in the present disclosure are only used to explain the specific embodiments of the present disclosure and are not intended to limit the present disclosure. The terms "first," "second," "third," "fourth" and the like in the specification, claims and drawings of the present disclosure are used to distinguish different objects rather than to describe a specific order. Furthermore, the terms "include/comprise," "has/having," and any variations thereof, are intended to cover a non-exclusive inclusion.

In the embodiments of the present disclosure, the reference to "comprising/including" may refer to directly or indirectly comprising/including. Alternatively, the reference to "comprising/including" in the embodiments of the present disclosure may be replaced with "indicating" or "to determine". For example, A including B may be replaced with A indicating B, or A being used to determine B.

In the embodiments of the present disclosure, the "indicate/indicated/indicating/indication" mentioned may be a direct indication, an indirect indication, or may mean that there is an indication of an associated relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the embodiments of the present disclosure, "B corresponding to A" means that B is associated with A, and B may be determined based on A. However, it shall also be understood that determining B based on A does not mean determining B based on A only, and B may also be determined based on A and/or other information.

In the embodiments of the present disclosure, the term "correspond/corresponding/correspondence" may indicate a direct correspondence or an indirect correspondence between the two, or may mean that there is an association relationship between the two, or may mean a relationship of indicating and being indicated, or a relationship of configuring and being configured, or the like.

In the embodiments of the present disclosure, "pre-defined" or "pre-configured" may be achieved by pre-storing, in a device (for example, including the terminal device and the network device), a corresponding code, a table or other manner that may be used to indicate relevant information, and a specific implementation manner thereof is not limited in the present disclosure. For example, pre-defined may refer to being defined in a protocol.

In the embodiments of the present disclosure, the "protocol" may refer to a standard protocol in the communication field. For example, it may include an LTE protocol, an NR protocol, and a related protocol used in a future communication system, which is not limited in present disclosure.

In the embodiments of the present disclosure, the term "and/or" is merely an association relationship to describe associated objects, which indicates that three kinds of relationships may exist. For example, "A and/or B" may mean three cases as follows: A exists alone, both A and B exist, or B exists alone. A character "/" usually indicates that the associated objects before and after the "/" are in an "or" relationship.

In various embodiments of the present disclosure, values of serial numbers of the aforementioned processes do not mean an execution order. The execution order of each process shall be determined by its function and internal logic, and shall not impose any limitations on an implementation process of the embodiments of the present disclosure.

It shall be understood that the disclosed systems, apparatuses, and methods in several embodiments provided in the present disclosure may be implemented in other ways. For example, the apparatus embodiments described above are merely exemplary only. For example, a division of units is merely a division based on logical functions while other division manners exist in an actual implementation. For example, multiple units or components may be combined or integrated into another system, or some characteristics may be omitted or skipped. Furthermore, the displayed or discussed mutual coupling, direct coupling or communicative connection through some ports, apparatuses, or units whether indirectly or communicatively by ways of electrical, mechanical, or other kinds of forms.

The units described as separating components may or may not be physically separated, and components as units for display may or may not be physical units. That is, they may be located in a place or distributed on multiple network units. Some or all of the units may be selected according to actual needs to achieve the purpose of the solution of the embodiments.

Furthermore, various function units in various embodiments of the present disclosure may be integrated into a processing unit, or be physically independent. Alternatively, two or more than two units are integrated in one processing unit.

All or some of the above embodiments may be implemented by software, hardware, firmware or any combination thereof. When implemented using software, all or some of embodiments may be implemented in a form as a computer program product. The computer program product includes one or more computer instructions. When the computer program instructions are loaded and executed on a computer, all or some processes or functions described in the embodiments of the present disclosure are generated. The computer may be a general-purpose computer, a dedicated-purpose computer, a computer network, or other programmable device. The computer instructions may be stored in a computer-readable storage medium. Alternatively, the computer instructions may be transmitted from a computer-readable storage medium to another computer-readable storage medium. For example, the computer instructions may be transmitted from a website, a computer, a server, or a data center to another website, another computer, another server, or another data center via a wired manner (e.g., a coaxial cable, optical fiber, a digital subscriber line (DSL)) or a wireless manner (e.g., an infrared or radio manner, microwave, etc.) . The computer-readable storage medium may be any available medium that can be read by a computer, or the computer-readable storage medium may be a data storage device such as the server or the data center that includes one or more available mediums. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The above description is only a specific implementation manner of the present disclosure, but the protection scope of the present disclosure is not limited thereto. Any person skilled in the art familiar with the technical field may easily think of changes or substitutions within the technical scope disclosed in the present disclosure, which shall be covered by the protection scope of the present disclosure. Therefore, the protection scope of the present disclosure shall be based on the protection scope of the claims.

## Claims

1. A sidelink communication method, comprising:
   determining, by a first terminal device, a first channel state information reference signal (CSI-RS) resource in a first time unit, wherein the first time unit satisfies one of:

   the first time unit comprising a plurality of consecutive slots; and
   the first time unit comprising one slot, the first CSI-RS resource being a transmission resource reserved by a terminal device for transmitting CSI-RS.

2. The method according to claim 1, wherein the first time unit comprises a first slot available for transmitting a CSI-RS, the first slot comprises the first CSI-RS resource, and the first slot satisfies one or more of:

   the first slot being used to transmit the CSI-RS only;
   the first slot being not used to transmit a physical sidelink control channel (PSCCH);
   the first slot being not used to transmit second-stage sidelink control information (SCI); and
   the first slot being not used to transmit a physical sidelink shared channel (PSSCH).

3. The method according to claim 1 or 2, wherein the first time unit comprises a first slot available for transmitting a CSI-RS, the first slot comprises the first CSI-RS resource, and a first time-domain resource available for transmitting the CSI-RS in the first slot satisfies one or more of:

   a starting position of the first time-domain resource being determined based on a time-domain resource available for transmitting a PSCCH in the first slot;
   the starting position of the first time-domain resource being determined based on a time-domain resource available for transmitting second-stage SCI in the first slot;
   the starting position of the first time-domain resource being determined based on a second time-domain symbol available for sidelink transmission in the first slot;

the starting position of the first time-domain resource being determined based on a second time-domain symbol in the first slot; and

an ending position of the first time-domain resource being determined based on a guard symbol in the first slot.

4. The method according to claim 3, wherein in a case where the starting position of the first time-domain resource is determined based on the time-domain resource available for transmitting the PSCCH in the first slot,

the first time-domain resource starts from a starting position corresponding to the time-domain resource available for transmitting the PSCCH; or

the starting position of the first time-domain resource is determined according to a first time-domain symbol after the time-domain resource available for transmitting the PSCCH.

5. The method according to claim 3, wherein in a case where the starting position of the first time-domain resource is determined based on the time-domain resource available for transmitting the second-stage SCI in the first slot,

the starting position of the first time-domain resource is determined according to a first time-domain symbol after the time-domain resource available for transmitting the second-stage SCI.

6. The method according to any one of claims 2 to 5, wherein the first time unit comprises the plurality of slots, and the first slot is a slot other than an initial slot among the plurality of slots; or

the first time unit is the first slot.

7. The method according to any one of claims 1 to 6, wherein the first time unit comprises the plurality of slots, and a guard symbol in an earlier slot of adjacent slots among the plurality of slots is used to transmit a CSI-RS.

8. The method according to any one of claims 1 to 7, further comprising:

receiving or transmitting, by the first terminal device, first indication information, wherein the first indication information is used for indicating the first CSI-RS resource.

9. The method according to claim 8, wherein the first indication information is used for indicating one or more of:

a time-domain position of the first CSI-RS resource in the first time unit;

a number of CSI-RS resources included in the first time unit;

a number of time-domain symbols included in the first CSI-RS resource; and

CSI-RS resource information corresponding to the first CSI-RS resource.

10. The method according to claim 8 or 9, wherein the first indication information is carried in one or more of: SCI, a media access control control element (MAC CE), and proximity communication 5 (PC5)-radio resource control (PC5-RRC) signaling.

11. The method according to any one of claims 8 to 10, wherein the first time unit comprises the plurality of slots, and the first indication information is transmitted in the first time unit; or

the first time unit comprises one slot, the first time unit is a second slot, and the first indication information is transmitted in a third slot with an earlier time-domain position than the second slot.

12. The method according to claim 11, wherein a time interval between a time-domain resource of the first indication information and the first CSI-RS resource is greater than or equal to a first threshold.

13. The method according to claim 11, wherein in a case where the first indication information is transmitted in the third slot, a time interval between the second slot and the third slot is greater than or equal to a first threshold.

14. The method according to claim 13, wherein the time interval between the second slot and the third slot is determined based on a time interval between a starting time-domain position of the second slot and a first time point, and the first time point comprises one of:

a starting time of the third slot;

an ending time of the third slot;

a starting time of a time-domain resource of the first indication information transmitted in the third slot;

an ending time of the time-domain resource of the first indication information transmitted in the third slot;

a starting time of a time-domain resource of a PSCCH in the third slot;

an ending time of the time-domain resource of the PSCCH in the third slot;

a starting time of second-stage SCI in the third slot; and

an ending time of the second-stage SCI in the third slot.

**15.** The method according to any one of claims 12 to 14, wherein the first threshold is determined based on one or more of:

   pre-configuration information;
   pre-definition information;
   configuration information from a network device;
   timeDurationForQCL parameter;
   sl-timeDurationForQCL parameter;
   a terminal capability of a terminal device for receiving CSI-RS; and
   indication information transmitted by the terminal device for receiving CSI-RS.

**16.** The method according to any one of claims 12 to 15, wherein the first threshold is carried in one or more of SCI, a MAC CE, and PC5-RRC.

**17.** The method according to any one of claims 1 to 16, wherein a sidelink resource pre-emption enable parameter corresponding to the first CSI-RS resource is of a highest priority; and/or
a sidelink priority of the first CSI-RS resource is the highest priority.

**18.** The method according to any one of claims 1 to 17, wherein the plurality of consecutive slots comprises one or more of:

   a plurality of consecutive physical slots;
   a plurality of consecutive slots available for sidelink transmission; and
   a plurality of consecutive slots in a resource pool.

**19.** A terminal device, the terminal device being a first terminal device and comprising:
a processing unit, configured to determine a first channel state information reference signal (CSI-RS) resource in a first time unit, wherein the first time unit satisfies one of:

   the first time unit comprising a plurality of consecutive slots; and
   the first time unit comprising one slot, the first CSI-RS resource being a transmission resource reserved by a terminal device for transmitting CSI-RS.

**20.** The terminal device according to claim 19, wherein the first time unit comprises a first slot available for transmitting a CSI-RS, the first slot comprises the first CSI-RS resource, and the first slot satisfies one or more of:

   the first slot being used to transmit the CSI-RS only;
   the first slot being not used to transmit a physical sidelink control channel (PSCCH);
   the first slot being not used to transmit second-stage sidelink control information (SCI); and
   the first slot being not used to transmit a physical sidelink shared channel (PSSCH).

**21.** The terminal device according to claim 19 or 20, wherein the first time unit comprises a first slot available for transmitting a CSI-RS, the first slot comprises the first CSI-RS resource, and a first time-domain resource available for transmitting the CSI-RS in the first slot satisfies one or more of:

   a starting position of the first time-domain resource being determined based on a time-domain resource available for transmitting a PSCCH in the first slot;
   the starting position of the first time-domain resource being determined based on a time-domain resource available for transmitting second-stage SCI in the first slot;
   the starting position of the first time-domain resource being determined based on a second time-domain symbol available for sidelink transmission in the first slot;
   the starting position of the first time-domain resource being determined based on a second time-domain symbol in the first slot; and
   an ending position of the first time-domain resource being determined based on a guard symbol in the first slot.

**22.** The terminal device according to claim 21, wherein in a case where the starting position of the first time-domain resource is determined based on the time-domain resource available for transmitting the PSCCH in the first slot,

   the first time-domain resource starts from a starting position corresponding to the time-domain resource available for transmitting the PSCCH; or
   the starting position of the first time-domain resource is determined according to a first time-domain symbol after the time-domain resource available for transmitting the PSCCH.

**23.** The terminal device according to claim 21, wherein in a case where the starting position of the first time-domain resource is determined based on the time-domain resource available for transmitting the second-stage SCI in the first slot,
the starting position of the first time-domain resource is determined according to a first time-domain symbol after the time-domain resource available for transmitting the second-stage SCI.

**24.** The terminal device according to any one of claims 20 to 23, wherein the first time unit comprises a plurality of slots, and the first slot is a slot other than an initial slot among the plurality of slots; or
the first time unit is the first slot.

25. The terminal device according to any one of claims 19 to 24, wherein the first time unit comprises a plurality of slots, and a guard symbol in an earlier slot of adjacent slots among the plurality of slots is used to transmit a CSI-RS.

26. The terminal device according to any one of claims 19 to 25, further comprising:
a communication unit, configured to receive or transmit first indication information, wherein the first indication information is used for indicating the first CSI-RS resource.

27. The terminal device according to claim 26, wherein the first indication information is used for indicating one or more of:

a time-domain position of the first CSI-RS resource in the first time unit;
a number of CSI-RS resources included in the first time unit;
a number of time-domain symbols included in the first CSI-RS resource; and
CSI-RS resource information corresponding to the first CSI-RS resource.

28. The terminal device according to claim 26 or 27, wherein the first indication information is carried in one or more of: SCI, a media access control control element (MAC CE), and proximity communication 5 (PC5)-radio resource control (PC5-RRC) signaling.

29. The terminal device according to any one of claims 26 to 28, wherein the first time unit comprises a plurality of slots, and the first indication information is transmitted in the first time unit; or
the first time unit comprises one slot, the first time unit is a second slot, and the first indication information is transmitted in a third slot with an earlier time-domain position than the second slot.

30. The terminal device according to claim 29, wherein a time interval between a time-domain resource of the first indication information and the first CSI-RS resource is greater than or equal to a first threshold.

31. The terminal device according to claim 29, wherein in a case where the first indication information is transmitted in the third slot, a time interval between the second slot and the third slot is greater than or equal to a first threshold.

32. The terminal device according to claim 31, wherein the time interval between the second slot and the third slot is determined based on a time interval between a starting time-domain position of the second slot and a first time point, and the first time point comprises one of:

a starting time of the third slot;
an ending time of the third slot;
a starting time of a time-domain resource of the first indication information transmitted in the third slot;
an ending time of the time-domain resource of the first indication information transmitted in the third slot;
a starting time of a time-domain resource of a PSCCH in the third slot;
an ending time of the time-domain resource of the PSCCH in the third slot;
a starting time of second-stage SCI in the third slot; and
an ending time of the second-stage SCI in the third slot.

33. The terminal device according to any one of claims 30 to 32, wherein the first threshold is determined based on one or more of:

pre-configuration information;
pre-definition information;
configuration information from a network device;
timeDurationForQCL parameter;
sl-timeDurationForQCL parameter;
a terminal capability of a terminal device for receiving CSI-RS; and
indication information transmitted by the terminal device for receiving CSI-RS.

34. The terminal device according to any one of claims 30 to 33, wherein the first threshold is carried in one or more of: SCI, a MAC CE, and PC5-RRC.

35. The terminal device according to any one of claims 19 to 34, wherein a sidelink resource pre-emption enable parameter corresponding to the first CSI-RS resource is of a highest priority; and/or
a sidelink priority of the first CSI-RS resource is the highest priority.

36. The terminal device according to any one of claims 19 to 35, wherein the plurality of consecutive slots comprises one or more of:

a plurality of consecutive physical slots;
a plurality of consecutive slots available for sidelink transmission; and
a plurality of consecutive slots in a resource pool.

**37.** A terminal device, comprising a transceiver, a memory and a processor, wherein the memory is used to store a program, and the processor is used to call the program in the memory and control the transceiver to receive or transmit a signal to cause the terminal to perform the method according to any one of claims 1 to 18.

**38.** An apparatus, comprising a processor configured to call a program from a memory to cause the apparatus to perform the method according to any one of claims 1 to 18.

**39.** A chip, comprising a processor configured to call a program from a memory to cause a device equipped with the chip to perform the method according to any one of claims 1 to 18.

**40.** A computer-readable storage medium, storing a program thereon, wherein the program causes a computer to perform the method according to any one of claims 1 to 18.

**41.** A computer program product, comprising a program, wherein the program causes a computer to perform the method according to any one of claims 1 to 18.

**42.** A computer program, wherein the computer program causes a computer to perform the method according to any one of claims 1 to 18.

FIG. 1

FIG. 2

FIG. 3

FIG. 4

**Communication group**

Terminal device 1

Resource allocation

Resource allocation

Terminal device 2

Terminal device 3

Sidelink communication

FIG. 5

Terminal device 2

Terminal device 6

Terminal device 3

**Terminal device 1**

Terminal device 5

Terminal device 4

FIG. 6

Terminal device 1

Terminal device 2

Sidelink data

FIG. 7

**Communication group**

Terminal device 2

Terminal device 1

Terminal device 3

Terminal device 4

FIG. 8

FIG. 9A

FIG. 9B

FIG. 10

1010

1

5

2

3

4

FIG.11

1110

1111

1114

Time point 1

1112

Time point 2

1113

Time point 3

Time point 4

1

2

3

4

5

FIG. 12

RRC

N candidate TCI states

MAC

K activated TCI states

DCI

One or two used TCI states

FIG. 13

Sensing
window

Selection
window

w          x               y

$n-T_0$                              $n$                            $n+T_2$   PDB

$n-T_{proc,0}$        $n+T_1$

## FIG.14A

$m-T_3-T_{proc,0}$          $m-T_3+T_1$

Sensing
window

Selection
window

w               x               y

$m-T_3-T_0$          $n$          $m$                    $m-T_3+T_2$ PDB

$m-T_3$

## FIG. 14B

$k-T_3-T_{proc,0}$          $k-T_3+T_1$

Sensing
window

Selection
window

w          x               y

$k-T_3-T_0$     $n$                    $k$               $k-T_3+T_2$   PDB

$k-T_3$

## FIG. 14C

| A G C | PSCCH | PSSCH | CSI-RS | GP |
|---|---|---|---|---|

0  1  2  3  4  5  6  7  8  9  10  11  12  13

f

t

## FIG. 15

The first terminal device can determine a first CSI-RS resource in a first time unit — S1610

FIG.16

Resource(s) available for transmitting the CSI-RS(s)

FIG. 17A

Resource(s) available for transmitting the CSI-RS(s)

FIG. 17B

Resources available for transmitting the CSI-RSs

FIG. 17C

Resources available for transmitting the CSI-RSs

FIG.17D

Resources available for transmitting the CSI-RSs

FIG.17E

FIG. 18

FIG. 19

## INTERNATIONAL SEARCH REPORT

International application No.

**PCT/CN2023/082595**

| A. | CLASSIFICATION OF SUBJECT MATTER |
|---|---|
| | H04W72/0446(2023.01)i |

According to International Patent Classification (IPC) or to both national classification and IPC

| B. | FIELDS SEARCHED |
|---|---|

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

3GPP, CNTXT, ENTXTC, ENTXT, CNKI: 边链路, 侧边传输, 侧边链路, 侧边通信, 侧链路, 侧行传输, 侧行链路, 侧行通信, 旁链路, 多个, 复数个, 两个, 信道状态信息, 参考信号, 时间, 时隙, 时域, 帧, 资源, sidelink, SL, V2X, D2D, two, multiple, plurality, CSI, RS, time, slot?, frame, resource?

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020143059 A1 (GUANGDONG OPPO MOBILE TELECOMMUNICATIONS CORP., LTD.) 16 July 2020 (2020-07-16)<br>description, page 4 line 28-page 8 line 10, and figures 3, 6, and 7 | 1, 8, 18, 19, 26, 36-42 |
| X | US 2021105055 A1 (CHAE, H. et al.) 08 April 2021 (2021-04-08)<br>description, paragraphs 258-269 | 1, 8, 18, 19, 26, 36-42 |
| A | US 2021321403 A1 (APPLE INC.) 14 October 2021 (2021-10-14)<br>entire document | 1-42 |
| A | US 2023084636 A1 (QUALCOMM INC.) 16 March 2023 (2023-03-16)<br>entire document | 1-42 |
| A | WO 2023023946 A1 (GUANGDONG OPPO MOBILE TELECOMMUNICATIONS CORP., LTD.) 02 March 2023 (2023-03-02)<br>entire document | 1-42 |
| A | WO 2023028987 A1 (GUANGDONG OPPO MOBILE TELECOMMUNICATIONS CORP., LTD.) 09 March 2023 (2023-03-09)<br>entire document | 1-42 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| **10 December 2023** | **10 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/082595** |

## C.    DOCUMENTS CONSIDERED TO BE RELEVANT

| Category* | Citation of document, with indication, where appropriate, of the relevant passages | Relevant to claim No. |
|---|---|---|
| A | Huawei, HiSilicon. "R1-1812207, "Discussion on reference signal for sidelink control and data channel design"" *3GPP tsg_ran\wg1_rl1*, No. tsgr1_95, 03 November 2018 (2018-11-03), entire document | 1-42 |

Form PCT/ISA/210 (second sheet) (July 2022)

**INTERNATIONAL SEARCH REPORT**
Information on patent family members

International application No.

**PCT/CN2023/082595**

| Patent document cited in search report | | | Publication date (day/month/year) | Patent family member(s) | | | Publication date (day/month/year) |
|---|---|---|---|---|---|---|---|
| WO | 2020143059 | A1 | 16 July 2020 | BR | 112021013405 | A2 | 14 September 2021 |
| | | | | KR | 20210119402 | A | 05 October 2021 |
| | | | | JP | 2022515415 | A | 18 February 2022 |
| | | | | US | 2021329603 | A1 | 21 October 2021 |
| | | | | MX | 2021008181 | A | 11 August 2021 |
| | | | | EP | 3890415 | A1 | 06 October 2021 |
| | | | | EP | 3890415 | A4 | 12 January 2022 |
| | | | | EP | 3890415 | B1 | 18 October 2023 |
| US | 2021105055 | A1 | 08 April 2021 | | None | | |
| US | 2021321403 | A1 | 14 October 2021 | US | 2023132263 | A1 | 27 April 2023 |
| | | | | US | 11564227 | B2 | 24 January 2023 |
| | | | | KR | 20210125437 | A | 18 October 2021 |
| US | 2023084636 | A1 | 16 March 2023 | WO | 2023044223 | A1 | 23 March 2023 |
| WO | 2023023946 | A1 | 02 March 2023 | | None | | |
| WO | 2023028987 | A1 | 09 March 2023 | | None | | |

Form PCT/ISA/210 (patent family annex) (July 2022)